# EUROPEAN PATENT SPECIFICATION

(11) **EP 3 576 499 B1**
(45) Date of publication and mention of the grant of the patent: **03.03.2021**
(21) Application number: 18744864.2
(22) Date of filing: 23.01.2018
(51) Int. Cl.: H05B 47/18, H05B 47/19, H05B 47/10

(54) **LIGHT DRIVING DEVICE AND LIGHT DRIVING METHOD THEREFOR**
LICHTANSTEUERUNGSVORRICHTUNG UND LICHTANSTEUERUNGSVERFAHREN DAFÜR
DISPOSITIF DE COMMANDE DE LUMIÈRE ET PROCÉDÉ DE COMMANDE DE LUMIÈRE ASSOCIÉ

(30) Priority: 25.01.2017 KR 20170012301
(43) Date of publication of application: 04.12.2019
(73) Proprietor: LG Innotek Co., Ltd., Seoul 04637 (KR)
(72) Inventor: LEE, Youn Jin, Seoul 04637 (KR); KANG, Jun Young, Seoul 04637 (KR); KIM, Ji Won, Seoul 04637 (KR); PARK, Seong Soo, Seoul 04637 (KR); LEE, Jin, Seoul 04637 (KR); HAM, So Yeon, Seoul 04637 (KR)
(74) Representative: DREISS Patentanwälte PartG mbB
(86) International application number: PCT/KR2018/001027
(87) International publication number: WO 2018/139838

(56) References cited:
- EP-A1- 3 021 643
- KR-A- 20140 124 417
- KR-A- 20140 124 924
- KR-A- 20150 111 217
- KR-A- 20160 071 996
- US-A1- 2013 300 318
- US-B1- 8 319 452

## Description

### [Technical Field]

An embodiment relates to a light driving device, and more particularly, to a light driving device modularizing main functions of lighting and a light driving method thereof.

### [Background Art]

Recently, eco-friendly low-power consumption lighting has been in the limelight, and of these, it is no exaggeration to say that a core is a light emitting diode (LED) lighting technology, and a spread of LED lighting devices has been actively promoted. Modern lighting devices have a function that allows users to freely adjust brightness to their preference from just turning on or turning off.

In addition, an increase in a burden of electricity charges due to high oil prices and a stability problem of nuclear power generation require a change in the current energy consumption structure. In case of lighting, it accounts for about 20% of the global power consumption, and when replacing it with LED lighting, energy may be reduced by about 30 to 50% in the lighting field.

When IT technology (sensors, communication, microprocessor, etc.) is combined here to build a smart lighting system, it is possible to realize an optimal human-friendly lighting environment while achieving innovative energy saving (about 50 to 90%).

Meanwhile, general lighting currently realized is controlled through wire dimming control or wireless dimming control.

To this end, a lighting device is provided with an interface module for performing dimming control by any one of the wire dimming control and the wireless dimming control.

However, dimming control methods are applied differently depending on a region or country. Accordingly, the lighting device is manufactured to be mounted with different interface modules of the lighting device based on the dimming control method required by the region or country.

US8319452 B1 describes a dimming protocol detection method for LED light fixtures and controlling the LED light fixtures according to the detected dimming protocol.

Accordingly, there is a need for a standardized light driving device that may be applied to all dimming control methods.

### [Disclosure]

### [Technical Problem]

An embodiment of the present invention is directed to providing a standardized light driving device applicable to all dimming control methods.

In addition, an embodiment of the present invention is directed to providing a light driving device capable of removing a dimming function circuit block inside the light driving device and modularizing the dimming function circuit block so as to be detachable.

In addition, an embodiment of the present invention is directed to providing a light driving device capable of automatically recognizing an interface module inserted in the light driving device and automatically performing a configuration of the light driving device according to the recognized interface module.

Technical problems to be solved by the proposed embodiments are not limited to the above-mentioned technical problems, and other technical problems not mentioned may be clearly understood by those skilled in the art to which the embodiments proposed from the following descriptions belong.

### [Technical Solution]

A light driving device according to claim 1 includes: a housing; and a driving unit disposed inside the housing and outputting a lighting dimming signal, wherein the driving unit includes first and second interface parts to which first and second dimming interface modules are detachably coupled, respectively, and a controller for recognizing a dimming interface module coupled with at least one interface part of the first and second interface parts, setting a dimming mode according to a kind of the recognized dimming interface module, and outputting the lighting dimming signal based on the set dimming mode.

In addition, the first interface part is coupled with a wired dimming interface module of any one of 0-10V, a digital addressable lighting interface (DALI), and a remote device management (RDM), and the second interface part is coupled with a wireless dimming interface module of any one of ZigBee, Bluetooth, Z-wave, and WiFi.

Further, each of the first and second interface parts includes a plurality of pins connected to the wired or wireless dimming interface module, and any one of the plurality of pins receives module recognition information from the wired or wireless dimming interface module, and the controller determines the kind of the dimming interface module connected to the first and second interface parts using the module recognition information.

In addition, the driving unit further includes a power supply unit for supplying driving power to lighting based on a lighting dimming signal output from the controller.

Further, the driving unit further includes a configuration part driven by a power source supplied from the outside to receive and store a configuration value to be applied to dimming of lighting, and the configuration value includes at least one of a maximum current value of the lighting, a lighting degradation time compensation schedule information, a minimum current value of 0-10 V dimming, lighting dimming schedule information according to time, and lighting operation time information.

In addition, the controller sets an initial dimming mode based on the dimming interface module coupled with the first and second interface parts, and performs mode switching within a plurality of dimming modes including the set initial dimming mode, and the dimming mode includes a schedule mode, a 0-10V mode, a DALI mode, an RDM mode, a Zigbee mode, a Bluetooth mode, a Z-wave mode, and a WiFi mode.

Further, the controller switches the dimming mode based on the dimming interface module transmitting a dimming control signal, and when a return command to the initial dimming mode is input from the wireless dimming interface module, the controller switches the dimming mode to the initial dimming mode.

In addition, each of the first and second interface parts includes a plurality of pins arranged in a row direction, and the plurality of pins are grouped into at least two groups having different numbers, and the number of pins of the first group of the first interface part and the number of pins of the first group of the second interface part are different from each other, and the number of pins of the second group of the first interface part and the number of pins of the second group of the second interface part are different from each other.

Meanwhile, a light driving method of a light driving device according to claim 9 includes: inserting a dimming interface module into at least one of a plurality of interface parts; receiving module recognition information from the inserted dimming interface module; determining a kind of the inserted dimming interface module based on the received module recognition information; setting a dimming mode based on the determined dimming interface module; receiving a control command from the inserted dimming interface module; and outputting a lighting dimming signal according to the received control command.

In addition, the inserting includes inserting a wired dimming interface module of any one of 0-10V, a digital addressable lighting interface (DALI), and a remote device management (RDM) into a first interface part, and inserting a wireless dimming interface module any one of Zigbee, Bluetooth, Z-wave, and WiFi into a second interface part.

In addition, the receiving of the module recognition information includes receiving module recognition information transmitted from the inserted wired dimming interface module through any one pin of a plurality of pins constituting the first interface part, and receiving module recognition information transmitted from the inserted wireless dimming interface module through any one pin of a plurality of pins constituting the second interface part, and each of the wired dimming interface modules including the 0-10V, the DALI, and the RDM transmits predetermined voltage information via the specific pin of the first interface part, and each of the wireless dimming interface modules including the ZigBee, Bluetooth, Z-Wave, and WiFi transmits predetermined voltage information via the specific of the second interface part.

Further, the light driving method further includes supplying driving power of a specific magnitude to lighting based on the output lighting dimming signal.

Furthermore, the light driving method further includes receiving and storing a configuration value to be applied to dimming of lighting driven by a power source supplied from the outside, wherein the configuration value includes at least one of a maximum current value of the lighting, a lighting degradation time compensation schedule information, a minimum current value of 0-10 V dimming, lighting dimming schedule information according to time, and lighting operation time information.

The light driving method further includes performing mode switching within at least two dimming modes of a schedule mode, a 0-10V mode, a DALI mode, an RDM mode, a Zigbee mode, a Bluetooth mode, a Z-wave mode, and a WiFi mode.

In addition, the performing of the mode switching includes setting an initial dimming mode based on the dimming interface module coupled with the first and second interface parts, switching a dimming mode so as to correspond to the dimming interface module providing the dimming control signal when the dimming control signal is received, and switching the dimming mode to the initial dimming mode when a return command to the initial dimming mode is input from the specific dimming interface module.

### [Advantageous Effects]

According to an embodiment of the present invention, it is possible to provide a standardized light driving device applicable to all dimming control methods.

In addition, according to an embodiment of the present invention, a dimming function circuit block in a light driving device can be removed, thereby reducing a product cost.

Further, according to an embodiment of the present invention, in case of a light driving device to which a dimming control method is not applied, a product size can be drastically reduced.

Furthermore, according to an embodiment of the present invention, it is possible to extend a compatible dimming method only by additional development of a dimming module without changing a main driver.

In addition, according to an embodiment of the present invention, it is possible to simultaneously control a light driving device through a wired module and a wireless module, thereby facilitating maintenance.

Further, according to an embodiment of the present invention, an interface module inserted in a light driving device is automatically recognized, and a configuration of the light driving device according to the recognized interface module is automatically performed, thereby increasing convenience of a customer.

In addition, according to an embodiment of the present invention, a communication protocol between a main controller and a wireless module is designed (e.g., UART communication-based protocol) so that communication is performed between the main controller and the wireless module, and thus it is possible to update information, transmit status information, and read/write lighting configuration information, as well as dimming control of lighting using the wireless module.

### [Description of Drawings]

FIG.1 is a schematic view of a lighting system according to an embodiment of the present invention.
FIG. 2 is a view showing an external appearance of a light driving device according to an embodiment of the present invention, and FIG. 3 is a view showing a connection relationship between interface parts 211 and 212 and a dimming interface module in the light driving device of FIG. 2.
FIG. 4 is a block diagram showing a configuration of a light driving device 210 according to an embodiment of the present invention.
FIG. 5 is a view showing a pin structure of a first interface unit 211 according to an embodiment of the present invention, and FIG. 6 is a view showing a pin structure of a second interface unit 212 according to an embodiment of the present invention.
FIG. 7 is a diagram for explaining a switching process of a dimming mode according to an embodiment of the present invention.
FIG. 8 is a configuration diagram of a wireless module according to an embodiment of the present invention.
FIG. 9 is perspective view of the wireless module of FIG. 8.
FIGS. 10A to 10C are a top view, a side view viewed from the y-axis, and a side view viewed from the x-axis of the communication module of FIG. 9.
FIG. 11 is a top view of a printed circuit board inside the communication module of FIG. 9.
FIG. 12 is an enlarged view of an interface part of the printed circuit board of FIG. 11.
FIG. 13 is a cross-sectional view of an embodiment in which the interface part of FIG. 12 is taken along line I-I'.
FIG. 14 is a cross-sectional view of another embodiment in which the interface part of FIG. 12 is taken along line I-I'.
FIG. 15 is a cross-sectional view of an inside of the wireless module of FIG. 8 according to another embodiment of the present invention.
FIG. 16 is a top view of a printed circuit board of FIG. 15.
FIG. 17 is a cross-sectional view of an inside of a communication module of FIG. 8 according to still another embodiment of the present invention.
FIG. 18 is a flowchart for explaining step by step a setting method of a dimming mode according to an embodiment of the present invention.
FIGS. 19 to 21 are flowcharts for explaining step by step a configuration method according to an embodiment of the present invention.
FIGS. 22 and 23 are flowcharts for explaining step by step a switching method of a dimming mode according to an embodiment of the present invention.

### [Modes of the present invention]

Advantages, features, and methods of achieving the same of the present disclosure will become clear upon referring to embodiments described below in detail with reference to the accompanying drawings. However, the present disclosure is not limited to the embodiments disclosed below and may be realized in various other forms. The embodiments are merely provided to make the disclosure of the present disclosure complete and completely inform one of ordinary skill in the art to which the present disclosure pertains of the scope of the present disclosure. The present disclosure is defined only by the scope of the claims below. Like reference numerals refer to like elements throughout.

In describing embodiments of the present disclosure, when detailed description of a known function or configuration is deemed to unnecessarily blur the gist of the present disclosure, the detailed description will be omitted. Terms described below are terms defined in consideration of functions in the embodiments of the present disclosure and may vary depending on the intention of a user or operator or a practice. Therefore, such terms should be defined on the basis of the entire contents disclosed herein.

Combinations of blocks and steps of flowcharts in the accompanying drawings can be performed by computer program instructions. Such computer program instructions can be embedded in a processor of a general-purpose computer, a special-purpose computer, or other programmable data processing equipment. Therefore, the instructions performed by the processor of other programmable data processing equipment generate means for performing functions described in each of the blocks or each of the steps in the flowcharts in the drawings. Therefore, the instructions performed by the processor of other programmable data processing equipment generate means for performing functions described in each of the blocks or each of the steps in the flowcharts in the drawings. Because the computer program instructions can also be saved in a computer-usable or computer-readable memory capable of supporting a computer or other programmable data processing equipment to implement a function in a specific way, the instructions stored in the computer-usable or computer-readable memory can also produce a manufacturing item which incorporates an instruction means performing a function described in each of the blocks or each of the steps of the flowcharts in the drawings. Because the computer program instructions can also be embedded in a computer or other programmable data processing equipment, the instructions performed in a computer or other programmable data processing equipment by a process executed in a computer being generated by a series of operation steps being performed in the computer or other programmable data processing equipment can also provide steps for executing functions described in each of the blocks and each of the steps of the flowcharts in the drawings.

Each of the blocks or each of the steps may represent a module, a segment, or a part of a code including one or more executable instructions for executing a specified logical function(s). Also, it should be noted that functions mentioned in the blocks or steps can also be performed in a different order in a few alternative embodiments. For example, two blocks or steps which are consecutively illustrated can substantially be performed simultaneously, or the blocks or steps can also be performed in a reverse order sometimes according to corresponding functions.

Hereinafter, a lighting system will be described with reference to the accompanying drawings.

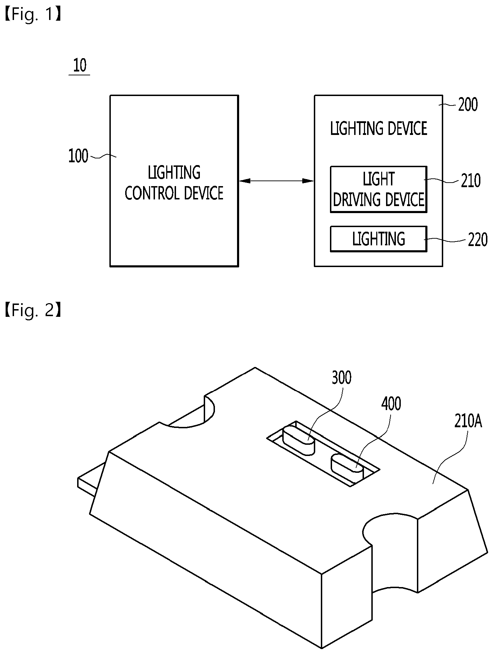

FIG.1 is a schematic view of a lighting system according to an embodiment of the present invention. Referring to FIG. 1, a lighting system 10 includes a lighting control device 100 and a lighting device 200.

The lighting control device 100 receives a control command for controlling the operation of the lighting device 200 from a user and transmits the received control command to the lighting device 200.

The lighting control device 100 transmits the control command to the lighting device 200 through a dimming interface compatible with the lighting device 200. Here, the dimming interface includes a wired interface and a wireless interface.

The wired interface includes a 0-10V interface, a digital addressable lighting interface (DALI) interface, a schedule interface, and a remote device management (RDM) interface.

The wireless interface may include Bluetooth, Zigbee, Z-wave, and WiFi.

Dimming through the 0-10V interface refers to a method of adjusting a voltage through a dimmer for separate voltage adjustment and controlling a current supplied to a lighting 220 constituting the lighting device 200 according to the adjusted voltage.

In addition, the DALI interface is one of lighting control protocols, the dimming through the DALI interface is performed by a DALI master receiving a control command provided from a terminal device (not shown), and transmitting the received control command to the lighting device 200 in which a DALI communication chip is embedded. That is, the DALI master may transmit the control command capable of controlling the lighting device 200 by using a signal transmitted via the terminal device. Further, the DALI master may vary in voltage and current conditions according to a product. For example, the voltage condition of the DALI master may be from 9.5 V to 22.5 V. The current condition of the DALI master may be from 8 mA to 250 mA. Therefore, the DALI master may vary in the voltage and current conditions.

The schedule interface is an interface for adjusting the dimming of the lighting 220 constituting the lighting device 200 according to time. This is implemented by storing dimming information of the lighting 200 according to a schedule in the lighting device 200 instead of including a separate configuration in the lighting device 200. That is, a schedule mode is a mode for controlling the dimming according to time, and is one of dimming interface modes. There is no module to be connected for this, and before an operation of the lighting 220, configuration information including the dimming information according to time should be stored in the lighting device 200.

The RDM interface is a concept extended from a digital multiplex (DMX) to bi-directional communication. Here, the DMX refers to a digital communication protocol capable of simultaneously controlling up to 512 lighting channels.

In addition, the wireless interface receives a control signal for the dimming of the lighting 220 via a wireless communication protocol of at least one of Bluetooth, Zigbee, Z-wave, and WiFi, and adjusts the dimming of the lighting 220 according to the received control signal.

Accordingly, the lighting control device 100 is a device generating the control command for controlling the dimming of the lighting 100 constituting the lighting device 200, and may change depending on the dimming interface set in the lighting device 200.

That is, the lighting control device 100 may be the dimmer for voltage adjustment in case of the 0-10V interface, the lighting control device 100 may be the DALI master in case of the DALI interface, the lighting control device 100 may be the terminal device for inputting the dimming information of the lighting according to time in case of the schedule interface, and the lighting control device 100 may be an RDM master in case of the RDM interface.

In addition, in case of the wireless interface of any one of Bluetooth, ZigBee, Z-wave and WiFi, the lighting control device 100 may be a terminal device transmitting lighting control information according to a corresponding wireless communication protocol.

Here, the terminal device may include at least one of a mobile phone, a smart phone, a laptop computer, a digital broadcasting terminal, a personal digital assistant (PDA), a portable multimedia player (PMP), and a navigation system. However, the present embodiment is not limited thereto, and the terminal device may be included in the lighting control device 100 when it is a device capable of downloading and installing an application and capable of wireless communication compatible with the lighting device 200.

The lighting device 200 includes an interface for receiving a control command provided from the lighting control device 100 and performs dimming control according to a control command received through the interface to generate light.

The lighting device 200 includes a light driving device 210 and a lighting 220. The lighting 220 is a device for generating light, and may include a light emitting diode (LED), a fluorescent lamp, an incandescent lamp, and a halogen lamp.

In addition, the LED may selectively emit light in a range of visible light to ultraviolet light. For example, it may include any one of a red LED, a blue LED, a green LED, a yellow green LED, a UV LED, and a white LED.

Further, the LED may include a plurality of light emitting diodes, and the plurality of light emitting diodes may emit white having correlated color temperatures (CCT) different from each other. At this time, when the plurality of light emitting diodes are used, efficiency may be increased as compared with a light source such as a fluorescent lamp, and a lifetime of the light source may be prolonged. Furthermore, the CCT may be a luminance ratio of red, green, and blue. When brightness of one or more of these three colors becomes higher or lower, the same white appears as red or blue. White is classified into warm white, neutral white and cool white depending on the CCT. It may be classified into the warm white of about 2700 K to 4000 K, the neutral white of 4000 K to 5000 K, and the cool white of 5000 K or more. In the embodiment, it is possible to set a first color temperature to neutral white, a second color temperature to warm white, and a third color temperature to cool white.

The light driving device 210 receives the control command transmitted from the lighting control device 100 and adjusts the voltage supplied to the lighting 220 according to the received control command. To this end, the light driving device 210 may be configured with interface parts 211 and 212 connected to the lighting control device 100, a power supply unit 213 supplying driving power to the lighting 220, and a controller 215 for controlling the driving power supplied to the lighting 220 according to the control command received through the interface parts 211 and 212.

The interface part 211 or 212 of the light driving device 210 is connected to the lighting control device 100 and receives the control command. At this time, the interface part 211 or 212 is connected to a 0-10V interface module, a DALI interface module, a RDM interface module, a Bluetooth module, a Zigbee module, a Z-wave module, and a WiFi module as described above.

Preferably, the 0-10V interface module, the DALI interface module, the RDM interface module, the Bluetooth module, the Zigbee module, the Z-wave module, and the WiFi may be detachably attached to the interface parts 211 and 212 of the light driving device 210. Accordingly, in an embodiment of the present invention, the dimming mode of the lighting 220 may be changed by selectively changing the dimming interface module mounted on the interface parts 211 and 212 of the light driving device 210.

The power supply unit 213 of the light driving device 210, according to a control signal supplied through the controller 215, converts a commercial AC power supplied from the outside into a DC power of a specific size required by the lighting 220, and supplies the converted DC power to the lighting 220.

The controller 215 of the light driving device 210 receives the control command transmitted from a specific dimming interface module through the interface parts 211 and 212, and adjusts the dimming by controlling the size of the DC power supplied to the lighting 220 according to the received control command.

At this time, the light driving device 210 allows various dimming interface modules to be detachably mounted as described above, and thus may be applied to all dimming control methods. Accordingly, generally, a separate circuit block for performing a dimming function should be provided in the light driving device 210, but the circuit block performing the dimming function may be detachably mounted in the interface parts 211 and 212 to remove it, thereby reducing a product cost. In addition, even in case of lighting in which a dimming control method is not applied, the separate dimming function circuit block is provided in the light driving device 210 in the related art, but in the present invention, the dimming function circuit block may be removed to greatly reduce a size of product.

In addition, the controller 215 of the light driving device 210 automatically recognizes the interface module inserted in the interface parts 211 and 212, and automatically performs the configuration of the light driving device and the dimming mode according to the recognized interface module.

In addition, communication between the controller 215 of the light driving device 210 and the interface parts 211 and 212 may be performed not only for dimming control of lighting using the wireless module, but also for updating information, transmitting status information, and reading/writing lighting configuration information by applying its own communication protocol such as UART.

Hereinafter, the light driving device 210 as described above will be described in more detail.

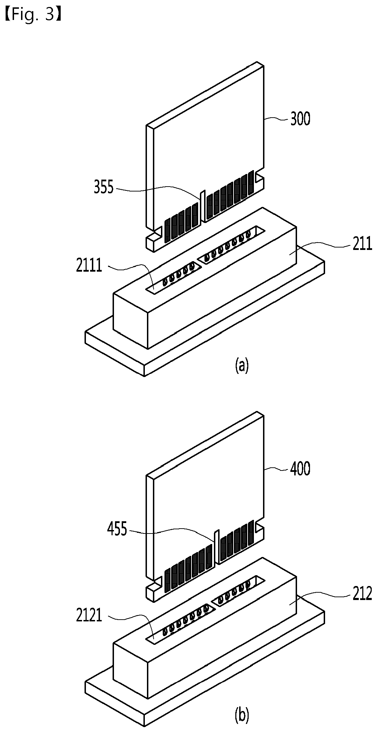

FIG. 2 is a view showing an external appearance of a light driving device according to an embodiment of the present invention, and FIG. 3 is a view showing a connection relationship between interface parts 211 and 212 and a dimming interface module in the light driving device of FIG. 2.

Referring to FIG. 2, a light driving device 210 includes a housing 210A including an accommodation space therein. A printed circuit board (not shown) on which the elements constituting interface parts 211 and 212, a power supply unit 213, and a controller 215 of the light driving device 210 as described above are mounted is accommodated in the accommodation space of the housing 210A.

A hole (not shown) exposing the interface parts 211 and 212 of the light driving device 210 is formed on an upper portion of the housing 210A. The hole passes through the upper portion of the housing 210A to expose the accommodation space inside the housing 210A to the outside. The interface parts 211 and 212 of the light driving device 210 are disposed in an area exposed through the hole.

The interface parts 211 and 212 may be a connector in which the dimming interface module described above is detachably inserted and fixed. Preferably, the plurality of interface parts 211 and 212 are spaced apart from each other by a predetermined distance. And the dimming interface module is inserted and fixed in the interface parts 211 and 212 of the light driving device 210 exposed through the hole.

Meanwhile, referring to FIG. 3, the interface parts 211 and 212 include a first interface part 211 and a second interface part 212, as described above. In addition, a wired module 300 is mounted on the first interface part 211 and a wireless module 400 is mounted on the second interface part 212.

In this case, the wired module 300 is a 0-10V interface module, a digital addressable lighting interface (DALI) interface module, or a remote device management (RDM) interface module. In addition, the wireless module 400 is any one of a module in which a Bluetooth communication chip is built, a module in which a Zigbee communication chip is built, a module in which a Z-wave communication chip is built, and a module in which a WiFi communication chip is built.

The first interface part 211 and the second interface part 212 are each standardized to 12 pins. Accordingly, the wireless module 400 which is not the wired module 300 may be mis-inserted into the first interface part 211 in the use environment, and in addition the wired module 300 which is not the wireless module 400 may be inserted into the second interface part 212.

Accordingly, in the present invention, mis-insertion and mixing are prevented through a structure design of the printed circuit board constituting the wired module 300 and the printed circuit board constituting the wireless module 400.

That is, as shown in FIG. 3A, a first recess portion 355 is disposed below the printed circuit board constituting the wired module 300, and as shown in FIG. 3B, a second recess portion 455 is disposed below the printed circuit board constituting the wireless module 400. Twelve pins disposed on each of the printed circuit boards are grouped into a plurality of groups through the first and second recess portions 355 and 455.

At this time, according to the present invention, positions of the first and second recess portions 355 and 455 may be differently disposed so that the wired module 300 and the wireless module 400 may be distinguished from each other, and accordingly, it is possible to prevent incorrect insertion.

That is, the first recess portion 355 of the wired module 300 is disposed in the left region with respect to a center of a lower portion of the printed circuit board, and the second recess portion 455 of the wireless module 400 is disposed in the right region with respect to the center of the lower portion of the printed circuit board.

Accordingly, a number of pins disposed on the left side is 5, and a number of pins disposed on the right side is 7 with respect to the first recess portion 355 in the wired module 300. On the other hand, a number of pins disposed on the left side of is 7 and a number of pins disposed on the right side is 5 with respect to the second recess portion 455 in the wireless module 400.

As described above, according to the present invention, the wired module 300 and the wireless module 400 may be distinguished from each other by applying positions of the recess portions 355 and 455 differently for each module, thereby preventing mis-insertion.

Hereinafter, configuration and operation of the light driving device 210 will be described in more detail.

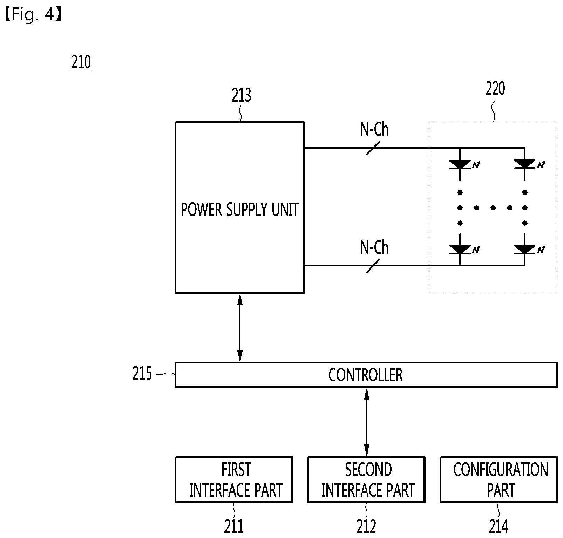

FIG. 4 is a block diagram showing a configuration of a light driving device 210 according to an embodiment of the present invention.

Referring to FIG. 4, the light driving device 210 includes a first interface part 211, a second interface part 212, a power supply unit 213, a configuration part 214, and a controller 215.

The first interface part 211 allows a wired module 300 to be inserted in a detachable manner, thereby receiving a control command transmitted via the wired module 300.

The second interface part 212 allows a wireless module 400 to be inserted in a detachable manner, thereby receiving a control command transmitted via the wireless module 400.

As described above, the first interface part 211 is an interface on which the wired module 300 of any one of a 0-10V interface module, a digital addressable lighting interface (DALI) interface module, and a remote device management (RDM) interface module is mounted. In addition, the second interface part 212 is an interface on which the wireless module 400 of any one of a module in which a Bluetooth communication chip is built, a module in which a Zigbee communication chip is built, a module in which a Z-wave communication chip is built, and a module in which a WiFi communication chip is built, is mounted.

At this time, each of the first and second interface parts 211 and 212 is composed of 12 pins, and is connected to the wired module 300 and the wireless module 400 through the 12 pins, respectively. In addition, any one of 12 pins of each of the first and second interface parts 211 and 212 receives information corresponding to module information from the wired module 300 and the wireless module 400.

The power supply unit 213 receives commercial AC power from the outside, converts the received commercial AC power into DC power required by the lighting 220, and outputs the DC power. To this end, the power supply unit 213 may include a line filter, a rectifier, a fly back converter, a transformer, and a buck converter. In addition, the power supply unit 213 may further include an auxiliary power supply unit for supplying auxiliary power (standby power) in a power saving mode.

For example, the power supply unit 213 receives AC power of 110 V to 220 V and may output DC power of any one of 25 V, 50 V, and 100 V using the AC power.

The configuration part 214 receives various configuration values applied to a dimming mode from the outside, and stores the received configuration values. At this time, the configuration part 214 may include a short range antenna and a near field controller. In other words, the configuration part 214 may include a near field communication (NFC) antenna and an NFC controller. In addition, the configuration part 214 is driven by a voltage supplied through a NFC transmitter in an off state in which power is not supplied to each component through the power supply unit 213, and stores the configuration value transferred through NFC transmitter in an internal memory. Accordingly, in the present invention, it is possible to receive and store the configuration value transmitted from the outside even when the controller 215 is in the off state in which auxiliary power or main power is not supplied.

Here, the configuration value refers to a programmable value in lighting such as a maximum current setting value of a lighting 220, deterioration time compensation schedule information of the lighting 220, minimum current setting of 0 to 10 V dimming, schedule information, and operation time information, and a series of processes for setting this is called a configuration.

The controller 215 controls the overall operation of the light driving device 210.

In particular, when the wired module 300 and/or the wireless module 400 are inserted into the first and second interface parts 211 and 212, the controller 215 receives module information through the inserted wired module 300 and/or the wireless module 400, and sets a dimming interface and a dimming mode using the received module information.

In addition, the controller 215 extracts the configuration value for dimming control of the lighting 220 from the memory of the configuration part 214, and performs dimming control of the lighting 220 by applying the extracted configuration value. At this time, the configuration value may be received through the configuration part 214 as described above, and may be processed through the wired module 300 and the wireless module 400 according to the wired module 300 and the wireless module 400 inserted in the first and second interface parts 211 and 212.

In addition, the controller 215 sets an initial dimming mode based on any one of the plurality of dimming interfaces, and performs mode switching within a plurality of dimming modes including the set initial dimming mode.

The mode switching may refer to switching between a dimming mode corresponding to the wired module 300 and dimming mode corresponding to the wireless module 400 when the wired module 300 and the wireless module 400 are both connected to the first and second interface parts 211 and 212.

In addition, the mode switching may refer to switching between a schedule mode and a dimming mode corresponding to the wireless module when the wireless module is connected to the second interface part 212.

This will be described in more detail below.

Hereinafter, a pin structure of the first and second interface parts 211 and 212 will be described in detail.

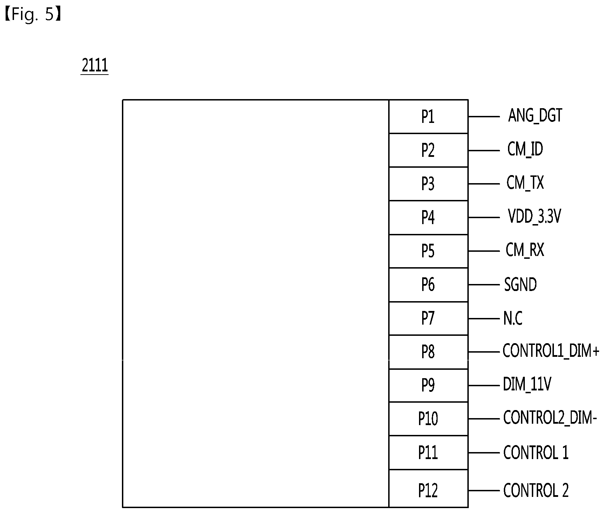

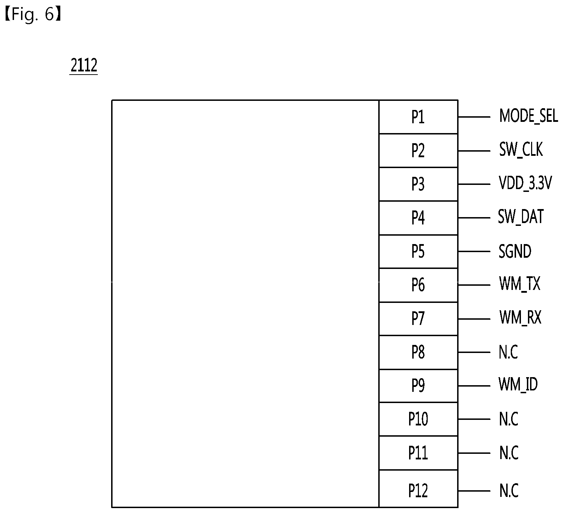

FIG. 5 is a view showing a pin structure of a first interface part 211 according to an embodiment of the present invention, and FIG. 6 is a view showing a pin structure of a second interface part 212 according to an embodiment of the present invention.

Referring to FIG. 5, the first interface part 211 includes first to twelfth pins P1 to P12. In addition, the first to twelfth pins P1 to P12 are respectively connected to pins constituting the wired module 300.

The first pin P1 is an ANG_DGT pin, which is a pin dedicated to a 0-10V interface module, and is a pin for receiving a dimming voltage level from the 0-10 V interface module when the inserted wired module is the 0-10V interface module.

The second pin P2 is a CM_ID, which is a pin for receiving a voltage level for module recognition from the wired module 300 connected to the first interface part 211.

The third pin P3 is a CM_TX, which is a pin for communication between the wired module 300 and the controller 215, and preferably, is a transmission pin for transmitting data from the controller 215 to the wired module 300.

The fourth pin P4 is VDD_3.3V, which is a pin for supplying power to the connected wired module 300.

The fifth pin P5 is a CM_RX pin, which is a pin for communication between the wired module 300 and the controller 215, and preferably, is a receiving pin for receiving data transmitted from the wired module 300 at the controller 215.

The sixth pin P6 is a SGND pin, which is a pin for grounding of the wired module 300.

The seventh pin P7 is N.C, which is a pin that has not been assigned with a special function in the current state, but is left for a future situation.

The eighth pin P8 is CONTROL1_DIM +, which is a pin for receiving a dimming voltage from an external dimmer for 0-10V dimming.

The ninth pin P9 is DIM_11V, which is a source pin for generating a dimming voltage level in the 0-10V interface module.

The tenth pin P10 is CONTROL2_DIM-, which is a pin for receiving the dimming voltage from the external dimmer for 0-10V dimming.

The eleventh pin P11 is CONTROL 1, which is a pin for receiving a DALI/DMX RDM signal from the outside.

The twelfth pin P12 is CONTROL 2, which is a pin for receiving a DALI/DMX RDM signal from the outside.

As described above, a voltage level input function is assigned to the second pin P2 of the first interface part 211, and the controller 215 determines a type of the wired module 300 connected to the first interface part 211 according to a voltage level inputted through the second pin P2, and sets the dimming interface and the dimming mode according to the determined type

The module recognition voltage level for the dimming interface corresponding to the wired module 300 is shown in Table 1 below.

**[Table 1]**

| Recognition Voltage Level | Dimming Interface and Dimming Mode |
|---|---|
| 0 < V <0.55 | Not connected |
| 0.55 < V < 1.10 | 0-10V |
| 1.10 < V < 1.65 | DALI |
| 1.65 < V < 2.20 | DMX RDM |
| 2.20 < V < 2.75 | - |
| 2.75 < V < 3.30 | - |

As described above, when a voltage between 0.55 V and 1.10 V is input through the second pin P2, the controller 215 recognizes the wired module connected to the first interface part 211 as a 0-10V dimming interface module.

In addition, when a voltage between 1.65 V and 2.20 V is input through the second pin P2, the controller 215 recognizes the wired module connected to the first interface part 211 as a DALI dimming interface module.

Further, when a voltage between 1.65V and 2.20V is input through the second pin P2, the controller 215 recognizes the wired module connected to the first interface part 211 as a DMX RDM dimming interface module

Referring to FIG. 6, the second interface part 212 includes first to twelfth pins P1 to P12. In addition, the first to twelfth pins P1 to P12 are respectively connected to pins constituting the wireless module 400.

The first pin P1 is a Mode-sel pin, which is a test pin used when testing a product in a mass production stage.

The second pin P2 is SW_CLK, which is a pin for downloading firmware to the controller 215, and specifically a pin to which a clock signal is provided.

The third pin P3 is VDD_3.3V, which is a pin for supplying power to the connected wireless module 400.

The fourth pin P4 is SW_DAT, which is a pin for downloading the firmware to the controller 215 together with the second pin, and specifically, a pin to which data is provided.

The fifth pin P5 is SGND, which is a pin for grounding of the wireless module 400.

The sixth pin P6 is a WM_TX, which is a pin for communication between the wireless module 400 and the controller 215, and preferably, is a receiving pin for receiving data transmitted from the wireless module 400 at the controller 215.

The seventh pin P7 is WM_RX, which is a pin for communication between the wireless module 400 and the controller 215, and preferably, is a receiving pin for receiving data transmitted from the wireless module 400 at the controller 215.

The eighth pin P8 is N.C, which is a pin that has not been assigned with a special function in the current state, but is left for a future situation.

The ninth pin P9 is WM_ID, which is a pin for receiving a voltage level for module recognition from the wireless module 400.

The tenth to twelfth pins P10 to P12 are N.C, which are pins that have not been assigned with a special function in the current state, but is left for a future situation.

As described above, a voltage level input function is assigned to the ninth pin P9 of the second interface part 212, and the controller 215 determines a type of the wireless module 400 connected to the second interface part 212 according to a voltage level inputted through the ninth pin P9, and sets the dimming interface and the dimming mode according to the determined type.

The module recognition voltage level for the dimming interface corresponding to the wireless module 400 is shown in Table 2 below.

**[Table 2]**

| Recognition Voltage Level | Dimming Interface and Dimming Mode |
|---|---|
| 0 < V <0.55 | Not connected |
| 0.55 < V < 1.10 | Bluetooth |
| 1.10 < V < 1.65 | Zigbee |
| 1.65 < V < 2.20 | Z-wave |
| 2.20 < V < 2.75 | WiFi |
| 2.75 < V < 3.30 | - |

As described above, when a voltage between 0.55 V and 1.10 V is input through the ninth pin P9, the controller 215 recognizes the wireless module connected to the second interface part 212 as a Bluetooth dimming interface module.

In addition, when a voltage between 1.10 V and 1.65 V is input through the ninth pin P9, the controller 215 recognizes the wireless module connected to the second interface part 212 as a Zigbee dimming interface module.

In addition, when a voltage between 1.65 V and 2.20 V is input through the ninth pin P9, the controller 215 recognizes the wireless module connected to the second interface part 212 as a Z-wave dimming interface module.

In addition, when a voltage between 2.20 V and 2.75 V is inputted through the ninth pin P9, the controller 215 recognizes the wireless module connected to the second interface part 212 as a WiFi dimming interface module.

The controller 215 receives the voltage level transmitted from the wired module or the wireless module inserted into the first and second interface parts 211 and 212 as described above, and confirms the connected dimming interface according to the received voltage level, and sets the dimming mode based on the confirmed dimming interface.

Meanwhile, when both the wired module and the wireless module are inserted into the first and second interface parts 211 and 212 or the wireless module is inserted into the second interface part 212, the controller 215 sets an initial dimming mode, and performs mode switching in a plurality of dimming modes including the set initial dimming mode.

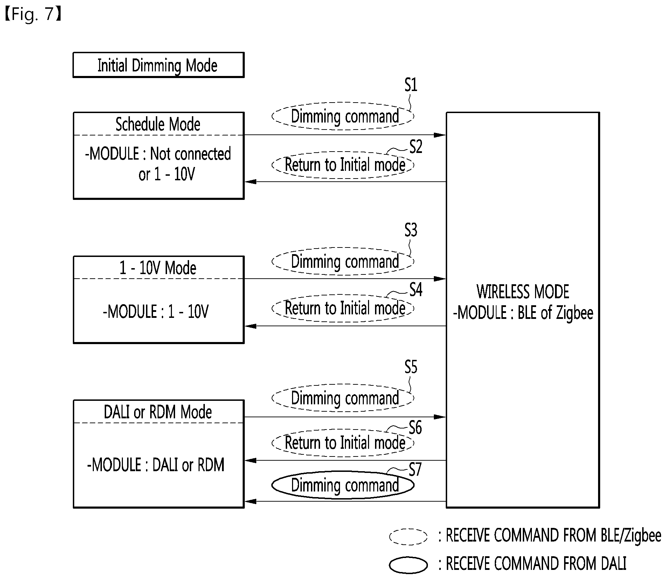

FIG. 7 is a diagram for explaining a switching process of a dimming mode according to an embodiment of the present invention.

Referring to FIG. 7, the controller 215 sets an initial dimming mode. Herein, the initial dimming mode may be set based on a wired module 300 inserted in the first interface part 211. For example, when there is no wired module 300 inserted in the first interface part 211 or it is a 1-10V dimming interface module, the controller 215 may set the initial dimming mode to a schedule mode.

In addition, when the wired module 300 inserted into the first interface part 211 is the 1-10V dimming interface module, the controller 215 may set the initial dimming mode to a 1-10V mode. That is, the controller 215 may set the initial dimming mode to the schedule mode in response to the connection of the 1-10V dimming interface module, and alternatively, the controller 215 may set the initial dimming mode to the 1-10V mode.

Further, when the wired module 300 inserted into the first interface part 211 is a DALI dimming interface module, the controller 215 may set the initial dimming mode to a DALI mode.

Furthermore, when the wired module 300 inserted into the first interface part 211 is an RDM dimming interface module, the controller 215 may set the initial dimming mode to an RDM mode.

In addition, in a state in which the initial dimming mode is set to the schedule mode, when a dimming command is input from the wireless module 400 inserted into the second interface part 212 (S1), the controller 125 changes the dimming mode from the schedule mode to a wireless mode. The wireless mode is determined by a communication protocol of the inserted wireless module 400. In other words, when the communication protocol of the wireless module 400 is Bluetooth, the controller 125 changes the dimming mode to a Bluetooth mode. And when the communication protocol of the wireless module 400 is ZigBee, the controller 125 changes the dimming mode to a ZigBee mode.

Further, when a mode switching command to return to the initial dimming mode is input from the wireless module 400 inserted into the second interface part 212 instead of the dimming command (S2), the dimming mode is changed from the wireless mode to the schedule mode.

That is, in the state in which the initial dimming mode is set to the schedule mode, when the wireless module 400 is connected, the dimming interface and the dimming mode are changed to the wireless mode. At this time, in case of the schedule mode, since there is no separate dimming interface and insertion module, it is not possible to be switched to the schedule mode by itself in the state changed to the wireless mode. Therefore, in the present invention, in case of the change from the schedule mode to the wireless mode as described above, it is possible to receive a specific command to return to the initial dimming mode from the connected wireless module 400, and to be switched from the wireless mode to the schedule mode according thereto.

In addition, in a state in which the initial dimming mode is set to a 0-10V mode, when the dimming command is input from the wireless module 400 inserted into the second interface part 212 (S3), the controller 125 changes the dimming mode from the 0-10V mode to the wireless mode. The wireless mode is determined by the communication protocol of the inserted wireless module 400. In other words, when the communication protocol of the wireless module 400 is Bluetooth, the controller 125 changes the dimming mode to the Bluetooth mode. And when the communication protocol of the wireless module 400 is ZigBee, the controller 125 changes the dimming mode to the ZigBee mode.

Further, when the mode switching command to return to the initial dimming mode is input from the wireless module 400 inserted into the second interface part 212 instead of the dimming command (S4), the dimming mode is changed from the wireless mode to the 0-10V mode.

Furthermore, in a state in which the initial dimming mode is set to the DALI mode or the RDM mode, when the dimming command is input from the wireless module 400 inserted into the second interface part 212 (S5), the controller 125 changes the dimming mode from the schedule mode to the wireless mode. The wireless mode is determined by the communication protocol of the inserted wireless module 400. In other words, when the communication protocol of the wireless module 400 is Bluetooth, the controller 125 changes the dimming mode to the Bluetooth mode. And when the communication protocol of the wireless module 400 is ZigBee, the controller 125 changes the dimming mode to the ZigBee mode.

Further, when the mode switching command to return to the initial dimming mode is input from the wireless module 400 inserted into the second interface part 212 instead of the dimming command (S6), the dimming mode is changed from the wireless mode to the DALI mode or the RDM mode.

Furthermore, when the dimming command is input from the DALI module or the RDM module inserted into the first interface part 212 (S7), the controller 125 changes the dimming mode from the wireless mode to the DALI mode or the RDM mode.

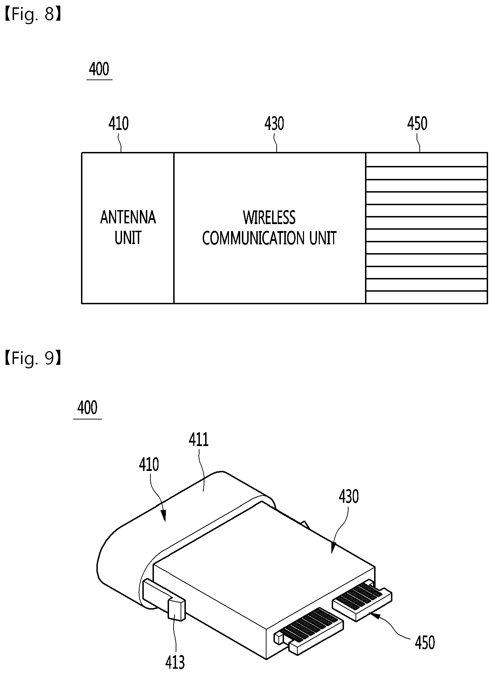

The wireless module 400 has the configuration shown in FIG. 8.

In this case, a specific structure of the wireless module 400 will be described below, but the wired module 300 mounted in the first interface part 211 may have the same shape and structure as the wireless module 400.

Referring to FIG. 8, the wireless module 400 includes one housing 411 or 431, and forms one unit in the housing 411 or 431, and an antenna unit 410, a wireless communication unit 430, and an interface part 450 are formed therein.

The antenna unit 410 receives a control signal transmitted through a wireless network from the lighting control device 100.

The wireless communication unit 430 receives the control signal from the antenna unit 410 and generates a plurality of output signals to be transmitted to the light driving device 210 according to the control signal.

The wireless communication unit 430 includes a communication integrated circuit 435 that analyzes the control signal of the antenna unit 410 according to a type of the wireless network.

That is, the wireless module 400 may select the communication integrated circuit 435 selectively according to the determined wireless network environment to mount the communication integrated circuit 435 in the wireless module 400.

The communication integrated circuit 435 may support at least one of communication methods such as ZigBee, Z-Wave, WiFi, Bluetooth, or the like.

The interface part 450 includes a plurality of pins 452a, 452b, 452c, 452d, 452e, 452f, 452g, 454a, 454b, 454c, 454d, and 454e corresponding to a plurality of output signals output from the wireless communication unit 430.

The number of the plurality of pins 452a, 452b, 452c, 452d, 452e, 452f, 452g, 454a, 454b, 454c, 454d, and 454e may be twelve as shown in FIG. 5, but is not limited thereto.

The interface parts 211 and 212 of the wireless module 400 and the light driving device 210 may set the output signals of each of the pins 452a, 452b, 452c, 452d, 452e, 452f, 452g, 454a, 454b, 454c, 454d, and 454e according to a lighting control method.

The configuration of each of the pins 452a, 452b, 452c, 452d, 452e, 452f, 452g, 454a, 454b, 454c, 454d, and 454e according to the lighting control method has already been described above, and thus the description will be omitted.

Hereinafter, a configuration of a detachable wireless module 400 inserted and fixed to the light driving device 210 will be described with reference to FIGS. 9 to 14.

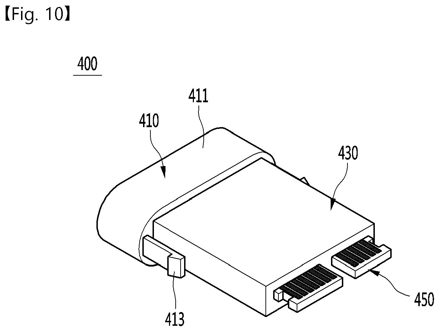

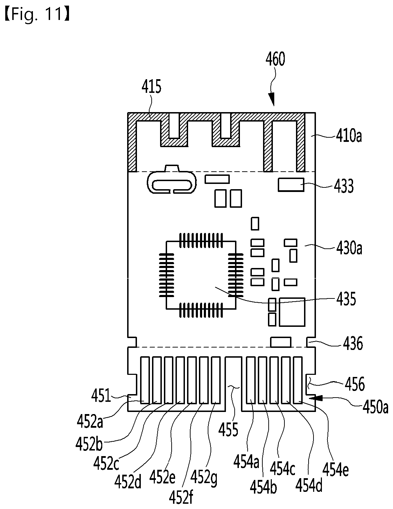

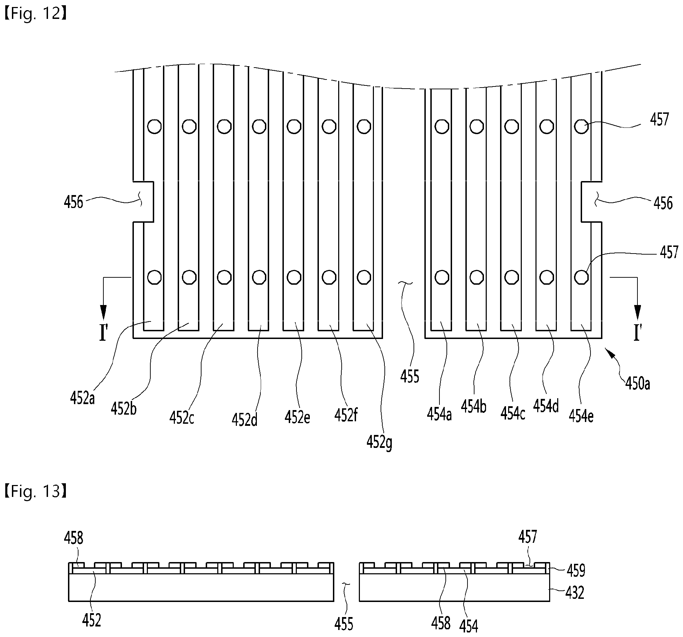

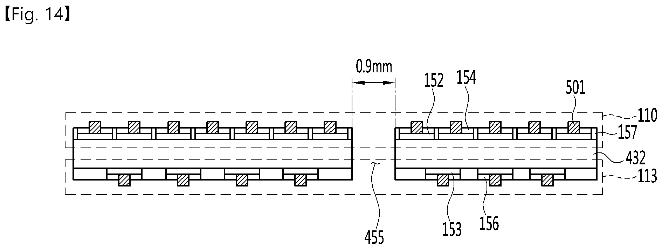

FIG. 9 is a perspective view of the wireless module of FIG. 8, FIGS. 10A to 10C are a top view, a side view viewed from the y axis, and a side view viewed from the x axis of a communication module of FIG. 9, FIG. 11 is a top view of a printed circuit board inside the communication module of FIG. 9, FIG. 12 is an enlarged view of an interface part of the printed circuit board of FIG. 11, FIG. 13 is a cross-sectional view of an embodiment in which the interface part of FIG. 12 is taken along line I-I', and FIG. 14 is a cross-sectional view of another embodiment in which the interface part of FIG. 12 is taken along line I-I'.

Referring to FIGS. 9 to 13, the wireless module 400 of an embodiment includes a printed circuit board on which an antenna unit 410, a wireless communication unit 430 and an interface part 450 are integrated, and housings 411 and 431 accommodating a part of the printed circuit board.

As shown in FIG. 9, the housings 411 and 431 protrude outside an area corresponding to the interface part 450 and accommodates the printed circuit board.

The housings 411 and 431 include a first accommodating part 411 in which the antenna unit 410 is accommodated, and a second accommodating part 431 protruded from the first accommodating part 411 in a first direction x and accommodating the wireless communication unit 430.

The first and second accommodating parts 411 and 431 may be formed as one body and may be a combined body of an upper body and a lower body coupled in a second direction z perpendicular to the first direction x.

The housings 411 and 431 may be formed of an insulating material, and preferably a plastic material of a rigid type such as polyimide.

The first accommodating part 411 has a space for accommodating the antenna unit 410 of the printed circuit board therein, and has a long rectangular shape in a third direction y.

In the first accommodating part 411, a first width d1 in the third direction y may be 20 to 25 mm, preferably 22 mm, and a width d6 in the first direction x is 6 To 7 mm, preferably 6.4 to 6.5 mm. In addition, a height d4 of the first accommodating part 411 in the second direction z may be 7 to 8 mm, preferably 7.7 mm.

A side of the first accommodating part 411 may be chamfered to have a curvature.

The printed circuit board inserted in a space of the first accommodating part 411 includes an antenna region corresponding to the antenna unit 410.

The antenna region 410a is formed on one end of the printed circuit board as shown in FIG. 8, and includes an antenna pattern 415 patterned on a support substrate 432.

The antenna pattern 415 may have a planar inverted F antenna (PIFA), but is not limited thereto.

That is, the antenna pattern 415 may be realized as a monopole antenna shape, a dipole antenna shape, or the like.

The antenna region 410a in which the support substrate 432 forms a dielectric body of the antenna, may include an antenna pattern 415 on the support substrate 432, a ground layer (not shown) below the substrate 432, and a matching pattern (not shown) inside or outside a dielectric body 432.

The antenna unit 410 is provided for transmitting and receiving signals in a predetermined frequency band. That is, the antenna pattern 415 may resonate in the predetermined frequency band to pass a signal. The antenna pattern 415 resonates at a predetermined reference impedance.

The antenna pattern 415 is disposed adjacent to the ground layer so that one end of the antenna pattern 415 is positioned at a feeding point. Here, the feeding point may pass through the substrate 432, which is a dielectric body, to extend to a lower surface of the substrate 432. In this case, the antenna pattern 415 may include at least one horizontal component circuit and a vertical component circuit that are separated by at least one curved portion.

For example, an antenna element 120 may be formed as at least one transmission circuit of a meander type, a spiral type, a step type, a loop type, and the like.

The ground layer is provided for grounding of the antenna pattern 415.

The inner or outer matching pattern is provided for matching an impedance of the antenna pattern 415 to the reference impedance.

As described above, it is possible to integrate into a small wireless module 400 by forming the antenna unit 410 in a flat plate shape.

The antenna pattern 415 may be formed of a conductive material and a material containing metal such as copper (Cu), aluminum (Al), nickel (Ni), molybdenum (Mo), or the like.

Meanwhile, in the second accommodating part 431 protruding from the first accommodating part 411 in the first direction x, a width d2 in the third direction y may be 17 to 18 mm, preferably 17.4 to 17.5 mm, and a width d7 in the first direction x may be 18 to 19 mm, preferably 18 to 18.2 mm. In addition, a height d5 of the second accommodating part 431 in the second direction z may be 4.5 to 5.2 mm, preferably 5 mm.

As described above, since the width d2 of the second accommodating part 431 in the third direction y is smaller than that of the first accommodating part 411, a predetermined dummy space is formed on a side surface of the first accommodating part 411, and since the second accommodating part 431 has a height d5 smaller than that of the first accommodating part 411, the second accommodating part 431 may be formed to have a step from the first accommodating part 411.

The second accommodating part 431 is formed in a pillar shape having a space for accommodating the wireless communication unit 430 of the printed circuit board therein, and the second accommodating part 431 may have a rectangular parallelepiped shape as shown in FIG. 9.

A fixing part 413 is formed in a space formed in the side surface of the first accommodating part 411.

As shown in FIG. 9, the fixing part 413 is formed in a dummy space formed by a difference in area between the first accommodating part 411 and the second accommodating part 431, and protrudes in the first direction x from the side surface of the first accommodating part 411.

Since the fixing part 413 is formed integrally with a body of the housings 411 and 431 and has a triangular protrusion at one end thereof, it may be inserted and locked to the second interface part 212 of the light driving device 210 to improve the fixing force.

The fixing part 413 may be formed on both sides of the second accommodating part 431, respectively, and may be formed opposite to each other such that the triangular protrusion faces outward.

Meanwhile, a plurality of elements as shown in FIG. 11 are mounted in a module region 430a of the printed circuit board corresponding to the wireless communication unit 430 inserted in the space of the second accommodating part 431.

The lighting control device 100 and a wireless integrated circuit 435 for transmitting and receiving are mounted in the module region 430a, and the wireless integrated circuit 435 may selectively mount one of the wireless integrated circuits 435 such as ZigBee, WiFi, Z-Wave, Bluetooth, and the like according to the wireless environment. In this case, a passive element and circuit configuration of a peripheral portion may be varied depending on a type of the wireless integrated circuit 435.

A connection pattern 433 for connection with an external-type antenna may be formed in a boundary region between the module region 430a and the antenna region 410a.

The housings 411 and 431 and a recess portion 436 for fixing the printed circuit board are formed in a boundary region between the module region 430a and a terminal region 450a, and the recess portion 436 couples to the protrusion formed on an inner surface of the housings 411 and 431.

Meanwhile, the terminal region 450a of the printed circuit board corresponding to the interface part 450 protruding to an end of the second accommodating part 431 of the housings 411 and 431 includes a plurality of pins 452a, 452b, 454a, 454b, and 454c as shown in FIG. 9.

In the terminal region 450a, a width in the first direction x from the end of the housings 411 and 431 may have a length d8 of 3.5 to 4.0 mm, and a width d3 in the third direction y may have a length of 15 mm.

The terminal region 450a includes a plurality of pins 4452a, 452b, 452c, 452d, 452e, 452f, 452g, 454a, 454b, 454c, 454d, and 454e on the support substrate 432, and the plurality of pins 452a, 452b, 454a, 454b, and 454c may include twelve pins 452a, 452b, 452c, 452d, 452e, 452f, 452g, 454a, 454b, 454c, 454d, and 454e as shown, but the present invention is not limited thereto.

As described above, when the plurality of pins 452a, 452b, 452c, 452d, 452e, 452f, 452g, 454a, 454b, 454c, 454d, and 454e are formed, the plurality of pins 452a, 452b, 452c, 452d, 452e, 452f, 452g, 454a, 454b, 454c, 454d, and 454e are grouped into any number, and the terminal region 450a includes a recess portion 455 in which the support substrate 432 between the grouped pins 452a, 452b, 452c, 452d, 452e, 452f, 452g, 454a, 454b, 454c, 454d, and 454e is removed.

The grouped pins 452a, 452b, 452c, 452d, 452e, 452f, and 452g are formed on the left side with respect to the recess portion 455 are defined as a first pin portion 451, and the right side grouped pins 454a, 454b, 454c, 454d, and 454e are defined as a second pin portion 453.

The first pin portion 451 and the second pin portion 451 include different numbers of pins 452a, 452b, 452c, 452d, 452e, 452f, 452g, 454a, 454b, 454c, 454d, and 454e.

When the terminal region 450a includes the 12 pins 452a, 452b, 452c, 452d, 452e, 452f, 452g, 454a, 454b, 454c, 454d, and 454e, the first pin portion 451 may include seven pins 452a, 452b, 452c, 452d, 452e, 452f, and 452g, and the second pin portion 453 may include five pins 454a, 454b, 454c, 454d, and 454e.

As described above, the front and back surfaces of the wireless module 400 may be distinguished by grouping the plurality of pins 452a, 452b, 452c, 452d, 452e, 452f, 452g, 454a, 454b, 454c, 454d, and 454e to have different numbers of pins 452a, 452b, 452c, 452d, 452e, 452f, 452g, 454a, 454b, 454c, 454d, and 454e.

In addition, the recess portion 455 may be formed between the first pin portion 451 and the second pin portion 453 to reduce interference formed between the pins 452a and 452b of the first pin portion 451 and the pins 454a, 454b, and 454c of the second pin portion 453.

A width of the recess portion 455 may be 0.9 mm or more, and a separation width between the pins 452a, 452b, 454a, 454b, and 454c and the pins 452a, 452b, 454a, 454b, and 454c may be set to 0.8 mm or less, but the present invention is not limited thereto.

A protrusion (not shown) protruding from the support substrate 432 may be further included at the boundary between the first pin portion 451 and the second pin portion 453.

Meanwhile, the terminal region 450a includes a locking groove 456 which is recessed to be concave in both sides.

As shown in FIG. 11, the locking groove 456 may be formed in the dummy region in which the pins 452a, 452b, 454a, 454b, and 454c are not formed, but a part of the pins 452a and 454e disposed at edges may be removed together to form the locking groove 456 as shown in FIG. 12.

When the terminal region 450a is inserted into the second interface part 212 of the light driving device 210, the locking groove 456 may couple with the protrusion (not shown) inside the second interface part 212 to improve the coupling force.

As shown in FIG. 12, the terminal region 450a may include at least one concave part 457 in the edge region in the first direction x of each of pins 452a, 452b, 452c, 452d, 452e, 452f, 452g, 454a, 454b, 454c, 454d, and 454e.

Specifically, as shown in FIG. 13, the printed circuit board includes the plurality of pins 452a, 452b, 452c, 452d, 452e, 452f, 452g, 454a, 454b, 454c, 454d, and 454e formed by patterning an electrode layer on a support substrate 432.

The support substrate 432 may be formed of an insulating layer having rigid or flexible characteristics, and may preferably be formed of a resin material including epoxy resin or polyimide resin.

The electrode layer including the pins 452a, 452b, 452c, 452d, 452e, 452f, 452g, 454a, 454b, 454c, 454d and 454e on the support substrate 432 may be formed of an alloy containing copper, aluminum, molybdenum, tungsten, and the like as a conductive material.

Preferably, the electrode layer may be formed by patterning a copper foil layer.

The electrode layer is patterned to form a plurality of circuit patterns, and in case of a region serving as a pad like pins 452a, 452b, 452c, 452d, 452e, 452g, 454a, 454b, 454c, 454d, and 454e of the terminal region 450a among thereof, plating is performed in an exposed region as shown in FIG. 13.

The plating may improve electrical conductivity while protecting external physical and chemical impacts.

The plating layer 458 may be formed using a metal such as nickel, gold, silver, or palladium, and preferably, nickel and gold plating may be performed on a copper foil layer.

The concave part 457 may be formed to remove at least the plating layer 458 and expose the pins 452a, 452b, 452c, 452d, 452e, 452f, 452g, 454a, 454b, 454c, 454d, and 454e. As described above, since the concave part 457 is formed in edge regions of the pins 452a, 452b, 452c, 452d, 452e, 452f, 452g, 454a, 454b, 454c, 454d and 454e, the fixing of the plating layer 458 and the electrode layer may be strengthened.

At this time, according to an embodiment, the concave part 457 may be formed while removing the electrode layer to expose the lower support substrate 432, and furthermore, it may be formed in a shape of a via hole from which the support substrate 432 is removed.

The concave part 457 is formed in an edge region among the areas of the pins 452a, 452b, 452c, 452d, 452e, 452f, 452g, 454a, 454b, 454c, 454d, and 454e excluding a central region in contact with the pins of the second interface part 212 of the light driving device 210 to increase the fixing force of the plating layer 458 and improve the reliability while maintaining the planarization of the pins 452a, 452b, 452c, 452d, 452e, 452f, 452g, 454a, 454b, 454c, 454d, and 454e.

The printed circuit board further includes a solder resist 459 covering a region excluding the pad including the pins 452a, 452b, 452c, 452d, 452e, 452f, 452g, 454a, 454b, 454c, 454d, and 454e on the support substrate 432.

Meanwhile, the terminal region 450a may have a configuration as shown in FIG. 14.

The terminal region 450a in FIG. 14 may include an upper pin 152 on the support substrate 432 and a lower pin 153 under the support substrate 432.

When the pins 152 and 153 are formed on upper and lower portions of the support substrate 432, stacked structures of both surfaces have the same structure of an electrode layer, plating layers 154 and 156 and a solder resist 157.

At this time, the upper and lower pins 152 and 153 are disposed so as to have a zigzag shape as shown in FIG. 14.

That is, upper and lower surfaces of the wireless module 400 may be divided by disposing the center of the pin 153 formed at the lower portion so as to correspond to the pin 152 formed at the upper portion and the separation region of the pin 152.

In addition, it is possible to contact the pins of the second interface part of the light driving device at different points to distribute pressure due to contact.

As described above, a plurality of functional elements constituting the wireless module 400 may be realized as one printed circuit board, and the antenna pattern 415, the pins 452 and 454, and an internal circuit pattern of the module region 430a may be formed simultaneously by patterning an electrode layer on the support substrate 432 of the printed circuit board.

The printed circuit board constituting the one wireless module 400 may be formed with different circuit patterns depending on the type of the wireless integrated circuit 435 and the control method (dimming mode) of the lighting 220.

Accordingly, when a plurality of printed circuit boards are formed depending on the type of the wireless integrated circuit 435 and the lighting control method, a specific printed circuit board may be selectively coupled to the housings 411 and 431 of the wireless module 400 to configure the wireless module 400.

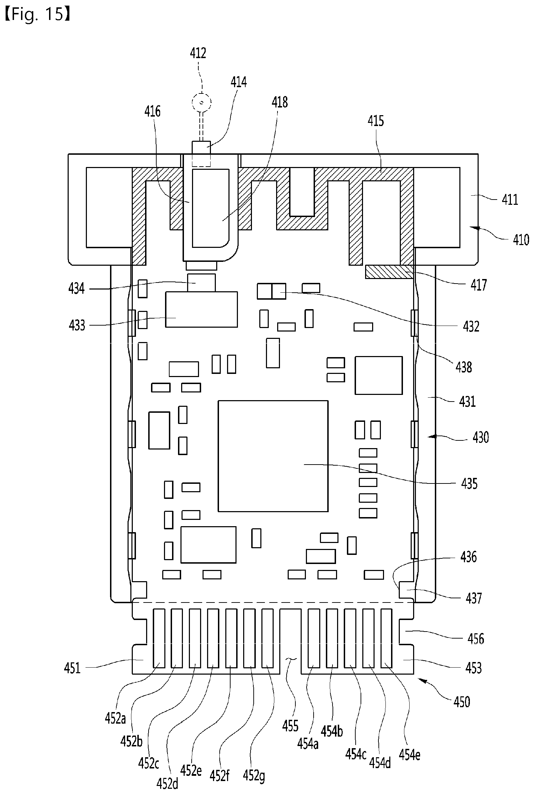

Hereinafter, another embodiment of the present invention will be described with reference to FIGS. 15 to 17.

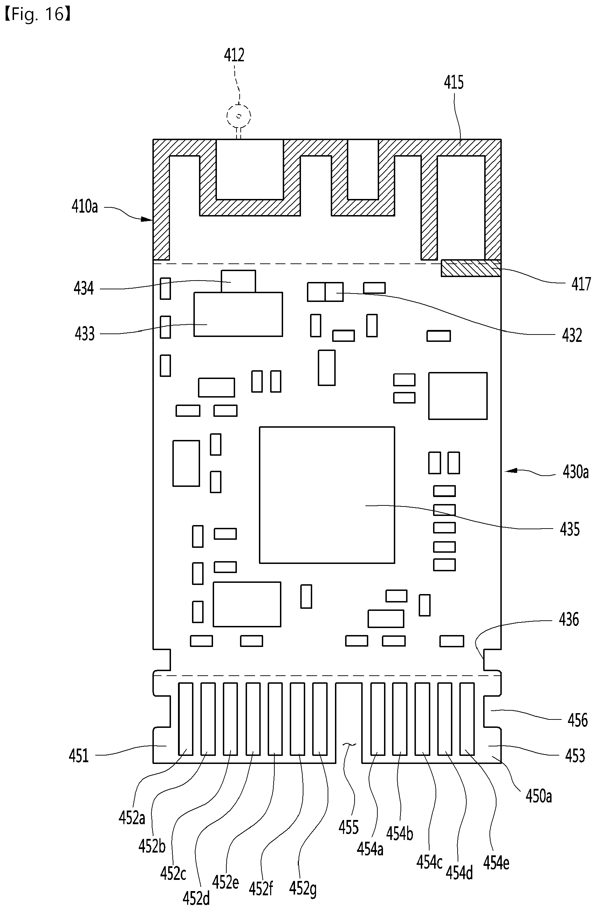

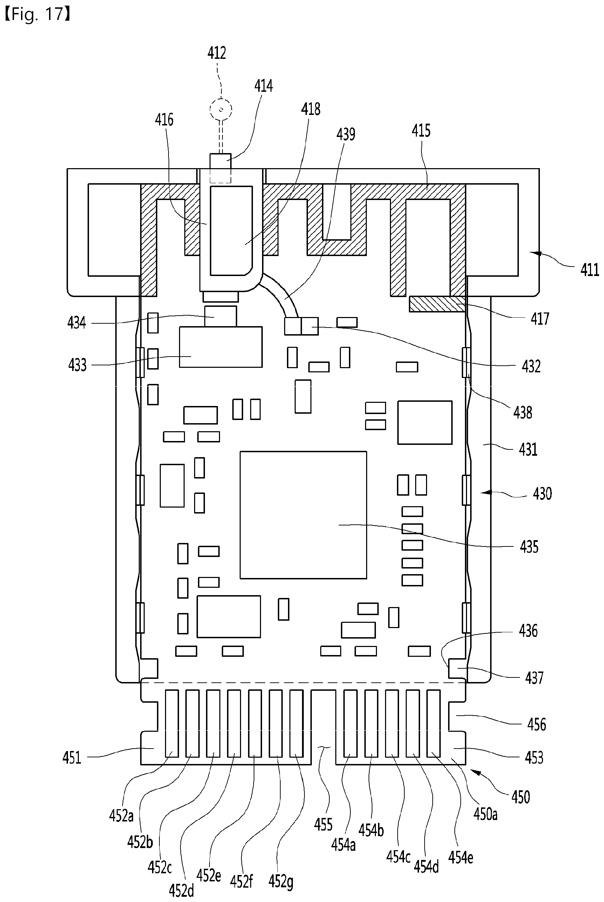

FIG. 15 is a cross-sectional view of an inside of the wireless module of FIG. 8 according to another embodiment of the present invention, FIG. 16 is a top view of a printed circuit board of FIG. 15, and FIG. 17 is a cross-sectional view of an inside of a communication module of FIG. 8 according to still another embodiment of the present invention.

The basic components of the communication module are the same as the descriptions of FIGS. 10 and 11.

Referring to FIGS. 15 and 16, the housings 411 and 431 of the wireless module include a first accommodating part 411 in which an antenna unit 410 is accommodated and a second accommodating part 431 protruding from the first accommodating part 411 in a first direction x and accommodating the wireless communication unit 430.

As shown in FIG. 10C, the first accommodating part 411 includes an opening 412 at a side surface viewed in the first direction, that is, a back surface of a side surface from which the second accommodating part 431 protrudes.

The opening 412 has a shape of a hole passing through the first accommodating part 411.

The opening 412 is used as a passage to emit light by detecting an internal malfunction from the outside.

The printed circuit board inserted in the space of the first accommodating part 411 includes an antenna region corresponding to the antenna unit 410.

The antenna region 410a is formed at one end of the printed circuit board as shown in FIG. 16, and includes an antenna pattern 415 patterned on a support substrate 432.

The antenna pattern 415 may have a shape of a planar inverted F antenna (PIFA), but the present invention is not limited thereto.

A plurality of elements as shown in FIG. 16 are mounted in a module region 430a of the printed circuit board corresponding to the wireless communication unit 430 inserted in the space of the second accommodating part 431.

A wireless integrated circuit 435 for transmitting and receiving to/from the lighting control device 100 is mounted in the module region 430a, and the wireless integrated circuit 435 may selectively mount one of the wireless integrated circuits 435 such as ZigBee, WiFi, Z-Wave, Bluetooth, and the like according to the wireless environment. In this case, a passive element and circuit configuration of a peripheral portion may be varied depending on a type of the wireless integrated circuit 435.

A reset switch 433 and a display part 432 are formed in a boundary region between the module region 430a and the antenna region.

The reset switch 433 is for resetting an operation of the wireless integrated circuit 435, and is formed in a straight line with the opening 412 of the first accommodating part 411.

The reset switch 433 includes a terminal 434 between the opening 412 and the reset switch 433, and recognizes a reset command by contacting with the terminal 434 and resets the wireless integrated circuit 435.

Meanwhile, a display part 432 is formed adjacent to the reset switch 433.

The display part 432 includes at least one light emitting diode, and the light emitting diode monitors an operating state of the wireless integrated circuit 435, and is turned on to emit light when a malfunction occurs.

The housings 411 and 431 include contact parts 416 and 418 protruding from an inside thereof and formed floating above the antenna region 410a.

The contact parts 416 and 418 are disposed between the opening 412 of the first accommodating part 411 and the reset switch 433.

The contact parts 416 and 418 may be integrally formed with the first accommodating part 411, but alternatively, may be attached to an inner surface of the first accommodating part 411.

The contact parts 416 and 418 may include a core part 418 and a protective part 416 surrounding the core part 418.

The protective part 416 may be formed of a light transmitting material that transmits light, and serve as a light guide between the display part 432 and the opening 412.

Therefore, a side surface of the protective part 416 facing the display part 432 may have a curved surface.

The contact parts 416 and 418 may further include a contact terminal protruding toward the terminal 434 of the reset switch 433.

The contact terminal is spaced apart from the terminal 434 of the reset switch by a predetermined distance in the normal operation.

The light emitting device constituting the display part 432 is disposed to be spaced apart from the contact parts 416 and 418 at a predetermined angle, and light emitted from the display part 432 is emitted to the outside through the opening 412 along a surface of the contact parts 416 and 418.

In this case, the opening 412 may be realized to pass through the first accommodating part 411 as shown in FIG. 9, but the opening 412 may be formed in a protrusion 414 protruding from the first accommodating part 411 as shown in FIG. 15.

When the opening 412 is formed in the protrusion 414 of the first accommodating part 411 as described above, when the light is emitted through the opening 412, a malfunction of the communication integrated circuit 435 may be detected from the outside, and a pressure may be applied to the protruding protrusion 414.

When the pressure is applied to the protrusion 414, the contact parts 416 and 418 are pushed by elastic force to be in contact with the terminal 434 of the reset switch 433, and thus the reset switch 433 may operate to reset the communication integrated circuit 435.

In this case, when the opening 412 is formed without the protrusion 414, the contact parts 416 and 418 may be directly pressurized by using a structure passing through the opening 412.

In this case, a wave guide 439 may be formed in a space between the display part 432 and the contact parts 416 and 418 as shown in FIG. 17 in order to reduce light loss in the space between the display part 432 and the contact parts 416 and 418.

In case of the optical wave guide 439, light from the light emitting device of the display part 432 may be transmitted to the contact parts 416 and 418 without loss by total reflection.

Meanwhile, a connection pattern 417 for connection with an external antenna may be formed in a boundary region between the module region 430a and the antenna region 410a.

A recess portion 436 for fixing the housing 411 or 431 to the printed circuit board is formed in a boundary region between the module region 430a and the terminal region 450a, and the recess portion 436 couples with a protrusion 437 formed at the inner surface of the housing 411 or 431.

In addition, the housing 411 or 431 includes a plurality of fixing protrusions 438 for fixing the side surface of the printed circuit board in addition to the protrusion 437 coupled with the recess portion 436.

The fixing protrusion 438 may have a height lower than that of the protrusion 437.

Meanwhile, the terminal region 450a of the printed circuit board corresponding to the interface part 450 protruding to an end portion of the second accommodating part 431 of the housing 411 or 431 includes the plurality of pins 452a, 452b, 452c, 452d, 452e, 452f, 452g, 454a, 454b, 454c, 454d, 454e as shown in FIG. 9.

In the terminal region 450a, a width in the first direction x from the end portion of the housing 411 or 431 may have a length d8 of 3.5 to 4.0 mm, and a width d3 in the third direction y may have a length of 15 mm.

The terminal region 450a includes a plurality of pins 452a, 452b, 452c, 452d, 452e, 452f, 452g, 454a, 454b, 454c, 454d, 454e on a support substrate 432, and the plurality of pins 452a, 452b, 452c, 452d, 452e, 452f, 452g, 454a, 454b, 454c, 454d, 454e may include 12 pins 452a, 452b, 452c, 452d, 452e, 452f, 452g, 454a, 454b, 454c, 454d, 454e as shown in the drawings, but the present invention is not limited thereto.

As described above, a plurality of functional elements constituting the wireless module 400 may be realized in one printed circuit board. The antenna pattern 415, the pins 452 and 454, and the internal circuit pattern of the module region 430a may be formed simultaneously by patterning the electrode pattern on the support substrate 432 of the printed circuit board.

The printed circuit board constituting one wireless module 400 may be formed with different circuit patterns according to the type of the wireless integrated circuit 435 and the lighting control method of the lighting 220.

Therefore, when a plurality of printed circuit boards are formed according to the type of the wireless integrated circuit 435 and the lighting control method, the wireless module 400 may be configured by selectively coupling a specific printed circuit board to the housing 411 or 431 of the wireless module 400.

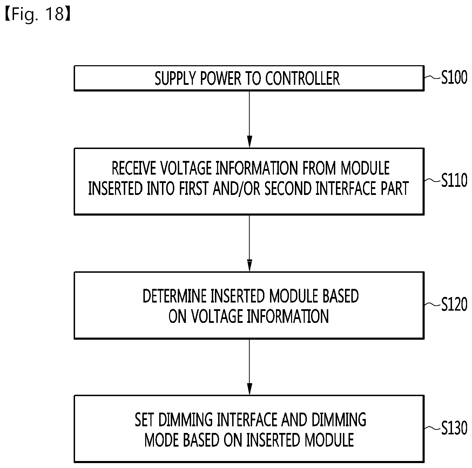

Hereinafter, a lighting driving method according to an embodiment of the present invention will be described with reference to FIGS. 18 to 23.

FIG. 18 is a flowchart for explaining step by step a setting method of a dimming mode according to an embodiment of the present invention.

Referring to FIG. 18, in a general operation mode of a light driving device 210, a power supply unit 213 supplies driving power to a controller 215 (Step 100). That is, the light driving device 210 may be divided into a power saving mode (standby mode) and the general operation mode, and the power supply unit 213 shuts off power supplied to each component in the power saving mode, and the blocked power is supplied again in the general operating mode.

In addition, the controller 213 receives voltage information from a wired module 300 or a wireless module 400 (Step 110) as the wired module 300 or the wireless module 400 is connected to a first interface part 211 and/or a second interface part 212.

That is, the controller 215 receives the voltage information transmitted from the wired module 300 through a second pin P2 as the wired module 300 is connected to the first interface part 211. And, the controller 215 receives the voltage information through a ninth pin P9 as the wireless module 400 is connected to the second interface part 212.

Then, the controller 215 determines a type of a module inserted in the first and/or second interface part 211 and/or 212 by using the received voltage information (Step 120).

That is, when a voltage between 0.55 V and 1.10 V is input through the second pin P2 of the first interface part 211, the controller 215 recognizes the wired module connected to the first interface part 211 as a 0-10V dimming interface module.

In addition, when a voltage between 1.10 V and 1.65 V is input through the second pin P2 of the first interface part 211, the controller 215 recognizes the wired module connected to the first interface part 211 as a DALI dimming interface module.

Further, when a voltage between 1.65V and 2.20V is input through the second pin P2 of the first interface part 211, the controller 215 recognizes the wired module connected to the first interface part 211 as a DMX RDM dimming interface module.

As described above, when a voltage between 0.55 V and 1.10 V is input through the ninth pin P9 of the second interface part 212, the controller 215 recognizes the wireless module connected to the second interface part 212 as a Bluetooth dimming interface module.

In addition, when a voltage between 1.10 V and 1.65 V is input through the ninth pin P9 of the second interface part 212, the controller 215 recognizes the wireless module connected to the second interface part 212 as a ZigBee dimming interface module.

Further, when a voltage between 1.65 V and 2.20 V is input through the ninth pin P9 of the second interface part 212, the controller 215 recognizes the wireless module connected to the second interface part 212 as a Z-Wave dimming interface module.

Furthermore, when a voltage between 2.20 V and 2.75 V is input through the ninth pin P9 of the second interface part 212, the controller 215 recognizes the wireless module connected to the second interface part 212 as a WiFi dimming interface module.

The controller 215 receives a voltage level transmitted from the wired module or the wireless module inserted in the first and second interface parts 211 and 212 as described above, and confirms a connection dimming interface according to the received voltage level, and sets a dimming mode based on the confirmed dimming interface (Step 130).

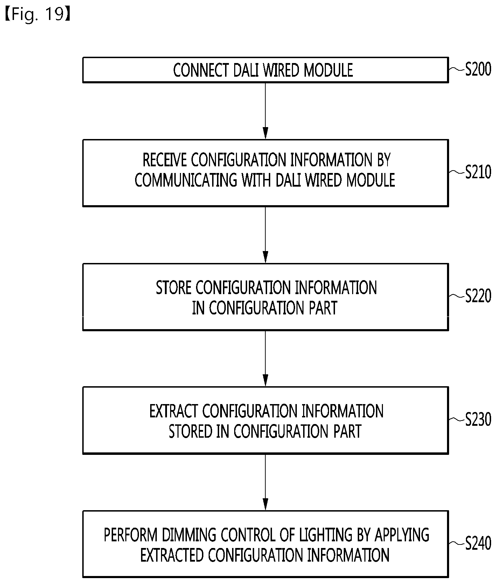

FIGS. 19 to 21 are flowcharts for explaining step by step a configuration method according to an embodiment of the present invention.

In an embodiment of the present invention, configuration information for a configuration may be received through a wired module 300 connected to the first interface part 211. Alternatively, the configuration information for the configuration may be received through a wireless module 400 connected to a second interface part 212, and alternatively, the configuration information for the configuration may be received through a configuration part 214.

First, a DALI module is connected to the first interface part 211 of the light driving device 210 (Step 200).

A controller 215 communicates with the DALI module connected to the first interface part 211 in the general operation mode to receive configuration information (Step 210). At this time, the configuration information may be transmitted from a terminal device corresponding to the lighting control device 100 to the DALI module.

Thereafter, the controller 215 stores the received configuration information in the configuration part 214 (Step 220). That is, in case of a flash memory of the controller 215, the number of times of writing is limited, and thus the received configuration information is not stored in the flash memory of the controller 215 but is stored in a NFC controller constituting the configuration part 214.

Next, the controller 215 extracts the configuration information stored in the configuration part 214 during dimming control of the lighting 220 (Step 230).

Then, the controller 215 performs the dimming control of the lighting 220 according to a control command received through the first and second interface parts 211 and 212 by applying the extracted configuration information (Step 240).

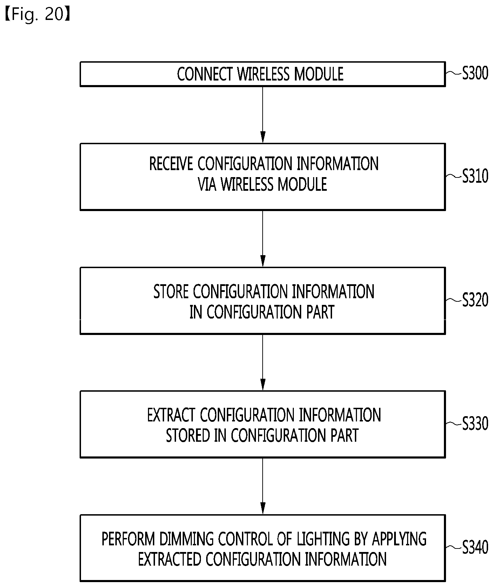

In addition, referring to FIG. 20, the wireless module 400 is connected to the second interface part 212 of the light driving device 210 (Step 300).

The controller 215 communicates with the wireless module 400 connected to the second interface part 212 in the general operation mode to receive the configuration information (Step 310). At this time, the configuration information may be transmitted from a terminal device corresponding to the lighting control device 100 to the wireless module.

Thereafter, the controller 215 stores the received configuration information in the configuration part 214 (Step 320). That is, in case of a flash memory of the controller 215, the number of times of writing is limited, and thus the received configuration information is not stored in the flash memory of the controller 215 but is stored in a NFC controller constituting the configuration part 214.

Next, the controller 215 extracts the configuration information stored in the configuration part 214 during dimming control of the lighting 220 (Step 330).

Then, the controller 215 performs the dimming control of the lighting 220 according to a control command received through the first and second interface parts 211 and 212 by applying the extracted configuration information (Step 340).

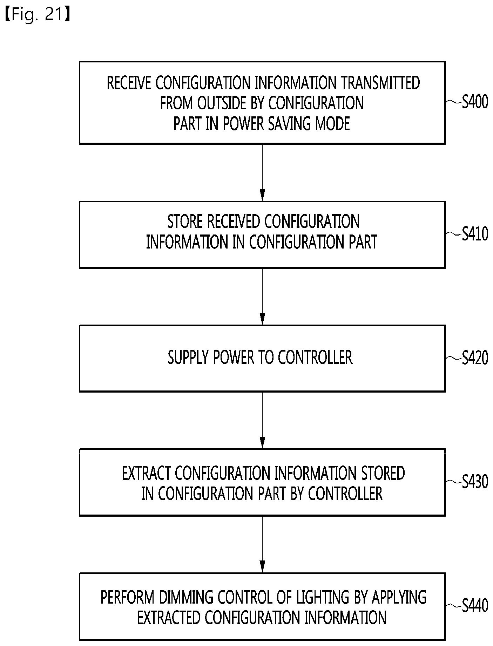

In addition, referring to FIG. 21, the configuration part 214 receives configuration information transmitted through an external NFC transmitter (not shown) in a power saving mode, and stores the received configuration information (Step 400). At this time, in the power saving mode, power is not supplied to the controller (215) or the configuration part (214), and the configuration part (214) is driven by the power transmitted through the NFC transmitter to receive the configuration information.

Thereafter, the configuration part 214 stores the received configuration information (Step 420).

Thereafter, in the general operation mode of the light driving device 210, the power supply unit 213 supplies driving power to the controller 215 (Step 420).

Then, the controller 215 is driven by the supplied driving power to extract configuration information stored in the configuration part 214 during dimming control of the lighting 220 (Step 430).

And then, the controller 215 applies the extracted configuration information to perform the dimming control of the lighting 220 according to the control command received through the first and second interface parts 211 and 212 (Step 440).

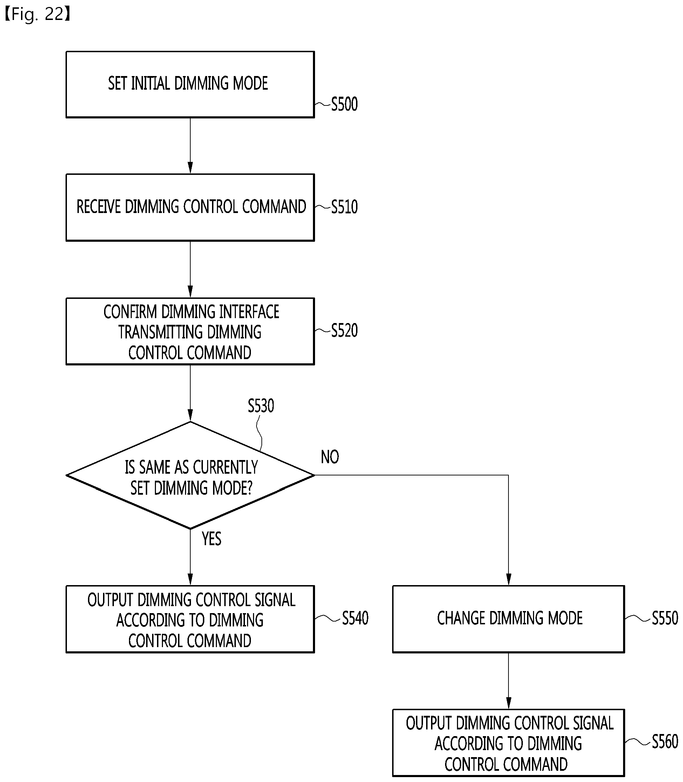

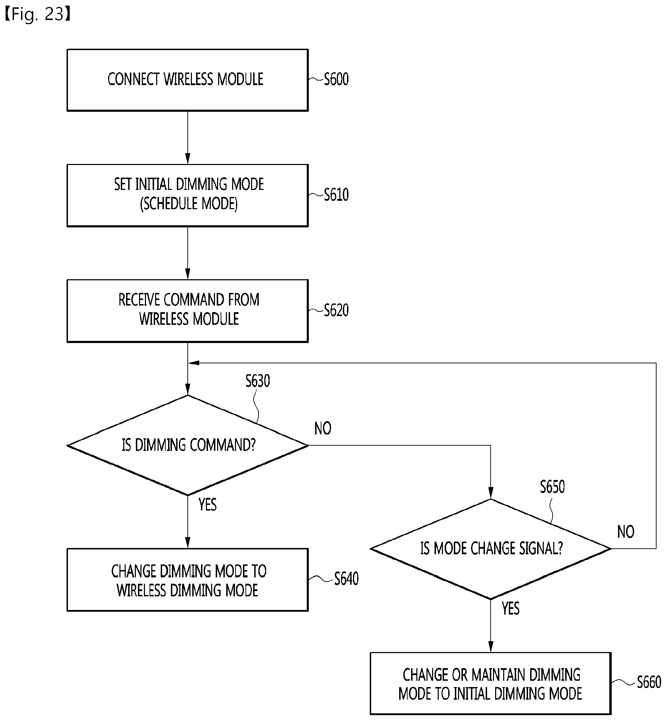

FIGS. 22 and 23 are flowcharts for explaining step by step a switching method of a dimming mode according to an embodiment of the present invention.

First, a controller 215 sets an initial dimming mode (Step 500).

Herein, the initial dimming mode may be set based on a wired module 300 inserted in the first interface part 211. For example, when there is no wired module 300 inserted in the first interface part 211 or it is a 1-10V dimming interface module, the controller 215 may set the initial dimming mode to a schedule mode.

In addition, when the wired module 300 inserted in the first interface part 211 is a 1-10V dimming interface module, the controller 215 may set the initial dimming mode to a 1-10V mode. That is, the controller 215 may set the initial dimming mode to the schedule mode according to connection of the 1-10V dimming interface module, and alternatively, the controller 215 may set the initial dimming mode to the 1-10V mode.

Further, when the wired module 300 inserted in the first interface part 211 is a DALI dimming interface module, the controller 215 may set the initial dimming mode to a DALI mode.

Furthermore, when the wired module 300 inserted in the first interface part 211 is an RDM dimming interface module, the controller 215 may set the initial dimming mode to an RDM mode.

Then, the controller 215 receives a dimming control command through the first or second interface part 211 or 212 (Step 510).

Thereafter, the controller 215 confirms the dimming interface that has transmitted the dimming control command (Step 520). That is, the controller 215 confirms whether the dimming control command is received through the first interface part 211 or the second interface part 212, and confirms a type of a module inserted in an interface part in which the control command is received.

Then, the controller 215 determines whether the confirmed dimming interface is a dimming interface corresponding to a currently set dimming mode (Step 530).

And then, when the confirmed dimming interface corresponds to the currently set dimming mode, the controller 215 maintains the currently set dimming mode and outputs a dimming control signal according to the received dimming control command (Step 540).

In addition, when the confirmed dimming interface is not the dimming interface corresponding to the currently set dimming mode, the controller 215 changes the dimming mode based on the confirmed dimming interface (Step 550).

Thereafter, the controller 215 outputs a dimming control signal according to the received dimming control command based on the changed dimming mode (Step 560).

In addition, referring to FIG. 23, a wireless module 400 is connected to the second interface part 212 of the light driving device 210 (Step 600).

Then, the controller 215 sets the initial dimming mode to the schedule mode or the 0-10V mode (Step 610).

Thereafter, the controller 215 receives a control command transmitted from the wireless module 400 through the second interface part 212 (Step 620).

Then, the controller 215 determines whether the received control command is a dimming control command (Step 630).

And then, when the received control command is the dimming control command, the controller 215 changes the dimming mode to the wireless mode and outputs a dimming control signal according to the received dimming control command (Step 640).

In addition, when the received control command is not the dimming control command, the controller 215 determines whether the received control command is a mode change signal (Step 650). That is, the controller 215 determines whether the mode change signal to return to the initial dimming mode is received from the wireless module 400.

Then, when the received control command is the mode change signal, the controller 215 changes the dimming mode to the schedule mode or the 0-10V mode which is the initial dimming mode (Step 600).

According to an embodiment of the present invention, it is possible to provide a standardized light driving device applicable to all dimming control methods.

In addition, according to an embodiment of the present invention, a dimming function circuit block in a light driving device can be removed, thereby reducing a product cost.

Further, according to an embodiment of the present invention, in case of a light driving device to which a dimming control method is not applied, a product size can be drastically reduced.

Furthermore, according to an embodiment of the present invention, it is possible to extend a compatible dimming method only by additional development of a dimming module without changing a main driver.

In addition, according to an embodiment of the present invention, it is possible to simultaneously control a light driving device through a wired module and a wireless module, thereby facilitating maintenance.

Further, according to an embodiment of the present invention, an interface module inserted in a light driving device is automatically recognized, and a configuration of the light driving device according to the recognized interface module is automatically performed, thereby increasing convenience of a customer.

In addition, according to an embodiment of the present invention, a communication protocol between a main controller and a wireless module is designed (e.g., UART communication based protocol) so that communication is performed between the main controller and the wireless module, and thus it is possible to update information, transmit status information, and read/write lighting configuration information, as well as dimming control of lighting using the wireless module.

Meanwhile, characteristics, structures and effects described in the embodiments of the present invention are included in at least one embodiment but are not limited to one embodiment. Furthermore, the characteristic, structure, and effect illustrated in each embodiment may be combined or modified for other embodiments by a person skilled in the art.

## Claims

1. A light driving device (210) comprising:
a housing (210A) and
a driving unit disposed inside the housing and adapted to output a lighting dimming signal,
the lighting driving device being **characterized in that** the driving unit includes first and second interface parts (211, 212) to which first and second dimming interface modules (300, 400) are detachably coupled, respectively, and a controller (215) adapted to determine a kind of dimming interface module when said first and second dimming interface modules are coupled with at least one respective interface part of the first and second interface parts, adapted to set a dimming mode according to the kind of determined dimming interface module, adapted to receive a control command from said first and second dimming interface modules coupled with said at least one respective interface part, and adapted to output the lighting dimming signal according to the received control command based on the set dimming mode,
wherein each of the first and second interface parts comprise:
a pin (P2, P9) configured to receive module recognition information from said dimming interface modules coupled with the first and second interface parts, and
wherein the controller is configured to determine the kind of dimming interface modules connected to the first and second interface parts using the module recognition information.

2. The light driving device of claim 1, wherein the first interface part (211) is coupled with a wired dimming interface module (300) of any one of 0-10V, a digital addressable lighting interface (DALI), and a remote device management (RDM), and
the second interface part (212) is coupled with a wireless dimming interface module (400) of any one of ZigBee, Bluetooth, Z-wave, and WiFi.

3. The light driving device of claim 2, wherein the pin (P2) of the first interface part is configured to receive the module recognition information from the wired dimming interface module coupled with the first interface part, wherein the received module recognition information is a voltage level, and wherein the controller is configured to determine the kind of wired dimming interface module connected to the first interface part according to the voltage level.

4. The light driving device of claim 3, wherein the pin (P9) of the second interface part is configured to receive the module recognition information from the wireless dimming interface module coupled with the second interface part, part, wherein the received module recognition information is a voltage level, and wherein the controller is configured to determine the kind of wireless dimming interface module connected to the second interface part according to the voltage level.

5. The light driving device of claim 1, wherein the driving unit further includes a configuration part (214) driven by a power source supplied from the outside to receive and store a configuration value to be applied to dimming of the lighting (220), and the configuration value includes at least one of a maximum current value of the lighting (220), a lighting degradation time compensation schedule information, a minimum current value of 0-10 V dimming, lighting dimming schedule information according to time, and lighting operation time information.

6. The light driving device of claim 2, wherein the controller is adapted to set an initial dimming mode based on the dimming interface module coupled with the first and second interface parts, and to switch to a different dimming mode within a plurality of dimming modes including the set initial dimming mode, and when a return command to the initial dimming mode is input from the wireless dimming interface module, the controller switches the dimming mode to the initial dimming mode, and
the dimming mode includes a schedule mode, a 0-10V mode, a DALI mode, an RDM mode, a Zigbee mode, a Bluetooth mode, a Z-wave mode, and a WiFi mode.

7. The light driving device of claim 3, wherein when the voltage level in a first range is input through the pin (P2) of the first interface part, the controller recognizes that no module is connected to the first interface part,
wherein when the voltage level in a second range is input through the pin of the first interface part, the controller recognizes the wired dimming interface module connected to the first interface part as a 0-10V dimming interface module,
wherein when the voltage level in a third range is input through the pin of the first interface part, the controller recognizes the wired dimming interface module connected to the first interface part as a DALI dimming interface module.
wherein when the voltage level in a fourth range is input through the pin of the first interface part, the controller recognizes the wired dimming interface module connected to the first interface part as a DMX RDM dimming interface module.

8. The light driving device of claim 4, wherein when the voltage level in a first range is input through the pin (P9) of the second interface part, the controller recognizes that no module is connected to the second interface part,
wherein when the voltage level in a second range is input through the pin of the second interface part, the controller recognizes the wireless dimming interface module connected to the second interface part as a Bluetooth dimming interface module,
wherein when the voltage level in a third range is input through the pin of the second interface part, the controller recognizes the wireless dimming interface module connected to the second interface part as a ZigBee dimming interface module.
wherein when the voltage level in a fourth range is input through the pin of the second interface part, the controller recognizes the wireless dimming interface module connected to the second interface part as a Z-Wave dimming interface module.
wherein when the voltage level in a fifth range is input through the pin of the second interface part, the controller recognizes the wireless dimming interface module connected to the second interface part as a WiFi dimming interface module.

9. A light driving method of a light driving device comprising:
inserting a dimming interface module (211, 212) into at least one of a plurality of interface parts (300, 400);
receiving (S110) module recognition information from the inserted dimming interface module;
determining (S120) a kind of inserted dimming interface module using the received module recognition information;
setting (S130) a dimming mode based on the kind of determined dimming interface module;
receiving a control command from the inserted dimming interface module; and
outputting a lighting dimming signal according to the received control command based on the set dimming mode,
wherein the receiving of the module recognition information comprises:
receiving module recognition information transmitted from a wired dimming interface module (211) through any one pin (P2) of a plurality of pins constituting a first interface part (300) of the plurality of interface parts, and
receiving module recognition information transmitted from a wireless dimming interface module (212) through any one pin (P9) of a plurality of pins constituting a second interface part (400) of the plurality of interface parts.

10. The light driving method of a light driving device of claim 9, wherein the inserting includes inserting a wired dimming interface module of any one of 0-10V, a digital addressable lighting interface (DALI), and a remote device management (RDM) into a first interface part, wherein the received module recognition information is a voltage level,
wherein the determining includes:
when the voltage level in a first range is input through the pin of the first interface part, recognizing that no module is connected to the first interface part,
when the voltage level in a second range is input through the pin of the first interface part, recognizing the wired dimming interface module connected to the first interface part as a 0-10V dimming interface module,
when the voltage level in a third range is input through the pin of the first interface part, recognizing the wired dimming interface module connected to the first interface part as a DALI dimming interface module.
when the voltage level in a fourth range is input through the pin of the first interface part, recognizing the wired dimming interface module connected to the first interface part as a DMX RDM dimming interface module..

11. The light driving method of a light driving device of claim 10, wherein the inserting includes inserting a wireless dimming interface module any one of Zigbee, Bluetooth, Z-wave, and WiFi into a second interface part, wherein the received module recognition information is a voltage level,
wherein the determining includes:
when the voltage level in the first range is input through the pin of the second interface part, recognizing that no module is connected to the second interface part,
when the voltage level in the second range is input through the pin of the second interface part, recognizing the wireless dimming interface module connected to the second interface part as a Bluetooth dimming interface module,
when the voltage level in the third range is input through the pin of the second interface part, recognizing the wireless dimming interface module connected to the second interface part as a ZigBee dimming interface module.
when the voltage level in the fourth range is input through the pin of the second interface part, recognizing the wireless dimming interface module connected to the second interface part as a Z-Wave dimming interface module.
when the voltage level in a fifth range is input through the pin of the second interface part, recognizing the wireless dimming interface module connected to the second interface part as a WiFi dimming interface module.

12. The light driving method of a light driving device of claim 10, further comprising
supplying driving power of a specific magnitude to the lighting (220) based on the output lighting dimming signal.

13. The light driving method of a light driving device of claim 10, further comprising
receiving and storing a configuration value to be applied to dimming of the lighting (220) driven by a power source supplied from the outside,
wherein the configuration value includes at least one of a maximum current value of the lighting (220), a lighting degradation time compensation schedule information, a minimum current value of 0-10 V dimming, lighting dimming schedule information according to time, and lighting operation time information.

14. The light driving method of a light driving device of claim 10, further comprising
performing mode switching within at least two dimming modes of a schedule mode, a 0-10V mode, a DALI mode, an RDM mode, a Zigbee mode, a Bluetooth mode, a Z-wave mode, and a WiFi mode.

15. The light driving method of a light driving device of claim 14, wherein the performing of the mode switching includes
setting an initial dimming mode based on the dimming interface module coupled with the first and second interface parts,
switching to a different dimming mode so as to correspond to the dimming interface module providing the control command when a control command is received, and
switching the dimming mode to the initial dimming mode when a return command to the initial dimming mode is input from the specific dimming interface module.

## Patentansprüche

1. Lichtansteuerungsvorrichtung (210), umfassend:
ein Gehäuse (210A) und eine Ansteuerungseinheit, die innerhalb des Gehäuses angeordnet und dazu ausgelegt ist, ein Lichtdimmsignal auszugeben, wobei die Lichtansteuerungsvorrichtung **dadurch gekennzeichnet ist, dass** die Ansteuerungseinheit erste und zweite Schnittstellenteile (211, 212) enthält, mit denen erste beziehungsweise zweite Dimmschnittstellenmodule (300, 400) abnehmbar gekoppelt sind, und eine Steuerung (215), die ausgelegt ist, um eine Art von Dimmschnittstellenmodul zu bestimmen, wenn das erste und das zweite Dimmschnittstellenmodul mit mindestens einem jeweiligen Schnittstellenteil des ersten und des zweiten Schnittstellenteils gekoppelt sind, das ausgelegt ist, um einen Dimmmodus gemäß der Art des bestimmten Dimmschnittstellenmoduls einzustellen, das ausgelegt ist, um einen Steuerbefehl von dem ersten und dem zweiten Dimmschnittstellenmodul zu empfangen, das mit dem mindestens einen jeweiligen Schnittstellenteil gekoppelt ist, und ausgelegt ist, um ein Lichtdimmsignal gemäß dem empfangenen Steuerbefehl basierend auf dem eingestellten Dimmmodus auszugeben, wobei jedes des ersten und des zweiten Schnittstellenteils umfasst:
einen Anschlussstift (P2, P9), der konfiguriert ist, um Modulerkennungsinformationen von diesen Dimmschnittstellenmodulen zu empfangen, die mit dem ersten und dem zweiten Schnittstellenteil gekoppelt sind, und wobei die Steuerung konfiguriert ist, um unter Verwendung der Modulerkennungsinformationen die Art der Dimmschnittstellenmodule zu bestimmen, die mit dem ersten und dem zweiten Schnittstellenteil verbunden sind.

2. Lichtansteuerungsvorrichtung nach Anspruch 1, wobei der erste Schnittstellenteil (211) mit einem verdrahteten Dimmschnittstellenmodul (300) von einem von 0-10V, einer digital adressierbaren Beleuchtungsschnittstelle (DALI) und einer Ferngeräteverwaltung (RDM) gekoppelt ist, und der zweite Schnittstellenteil (212) mit einem drahtlosen Dimmschnittstellenmodul (400) von einem von zigBee, Bluetooth, Z-Wave und WiFi gekoppelt ist.

3. Lichtansteuerungsvorrichtung nach Anspruch 2, wobei der Anschlussstift (P2) des ersten Schnittstellenteils konfiguriert ist, um Modulerkennungsinformationen von dem verdrahteten Dimmschnittstellenmodul zu empfangen, das mit dem ersten Schnittstellenteil gekoppelt ist, wobei die empfangenen Modulerkennungsinformationen ein Spannungspegel sind; und wobei die Steuerung konfiguriert ist, um die Art des verdrahteten Dimmschnittstellenmoduls zu bestimmen, das mit dem ersten Schnittstellenteil gemäß dem Spannungspegel verbunden ist.

4. Lichtansteuerungsvorrichtung nach Anspruch 3, wobei der Anschlussstift (P9) des zweiten Schnittstellenteils konfiguriert ist, um die Modulerkennungsinformationen von dem drahtlosen Dimmschnittstellenmodul zu empfangen, das mit dem zweiten Schnittstellenteil gekoppelt ist, wobei die empfangenen Modulerkennungsinformationen ein Spannungspegel sind; und wobei die Steuerung konfiguriert ist, um die Art des verdrahteten Dimmschnittstellenmoduls zu bestimmen, das mit dem zweiten Schnittstellenteil gemäß dem Spannungspegel verbunden ist.

5. Lichtansteuerungsvorrichtung nach Anspruch 1, wobei die Ansteuerungseinheit ferner einen Konfigurationsteil (214) enthält, der von einer extern versorgten Stromquelle angesteuert wird, um einen Konfigurationswert zu empfangen und zu speichern, der zum Dimmen der Beleuchtung (220) verwendet werden soll, und der Konfigurationswert mindestens einen von einem maximalen Stromwert der Beleuchtung (220), Informationen zum zeitlichen Verlauf der Kompensation der Beleuchtungsverschlechterungszeit, einem minimalen Stromwert des Dimmens auf 0-10 V, Informationen zum zeitlichen Verlauf für das Dimmen der Beleuchtung gemäß Zeit und Informationen für die Beleuchtungsbetriebszeit enthält.

6. Lichtansteuerungsvorrichtung nach Anspruch 2, wobei die Steuerung ausgelegt ist, um einen anfänglichen Dimmmodus basierend darauf, dass das Dimmschnittstellenmodul mit dem ersten und dem zweiten Schnittstellenteil gekoppelt ist, einzustellen und innerhalb einer Vielzahl von Dimmmodi, einschließlich des eingestellten anfänglichen Dimmmodus, auf einen anderen Dimmmodus umzuschalten, und wenn von dem drahtlosen Dimmschnittstellenmodul ein Rückkehrbefehl zu dem anfänglichen Dimmmodus eingegeben wird, die Steuerung den Dimmmodus in den anfänglichen Dimmmodus umschaltet, und
der Dimmmodus einen zeitlichen Verlaufsmodus, einen 0-10V-Modus, einen DALI-Modus, einen RDM-Modus, einen ZigBee-Modus, einen Bluetooth-Modus, einen Z-Wave-Modus und einen WiFi-Modus enthält.

7. Lichtansteuerungsvorrichtung nach Anspruch 3, wobei, wenn der Spannungspegel in einem ersten Bereich über den Anschlussstift (P2) des ersten Schnittstellenteils eingegeben wird, die Steuerung erkennt, dass kein Modul mit dem ersten Schnittstellenteil verbunden ist, wobei, wenn der Spannungspegel in einem zweiten Bereich über den Anschlussstift des ersten Schnittstellenteils eingegeben wird, die Steuerung das mit dem ersten Schnittstellenteil verbundene verdrahtete Dimmschnittstellenmodul als ein 0-10 V-Dimmschnittstellenmodul erkennt, wobei, wenn der Spannungspegel in einem dritten Bereich über den Anschlussstift des ersten Schnittstellenteiles eingegeben wird, die Steuerung das mit dem ersten Schnittstellenteil verbundene verdrahtete Dimmschnittstellenmodul als ein DALI-Dimmschnittstellenmodul erkennt, wobei, wenn der Spannungspegel in einem vierten Bereich über den Anschlussstift des ersten Schnittstellenteils eingegeben wird, die Steuerung das mit dem ersten Schnittstellenteil verbundene verdrahtete Dimmschnittstellenmodul als ein DMX RDM-Dimmschnittstellenmodul erkennt.

8. Lichtansteuerungsvorrichtung nach Anspruch 4, wobei, wenn der Spannungspegel in einem ersten Bereich über den Anschlussstift (P9) des zweiten Schnittstellenteils eingegeben wird, die Steuerung erkennt, dass kein Modul mit dem zweiten Schnittstellenteil verbunden ist, wobei, wenn der Spannungspegel über den Anschlussstift des zweiten Schnittstellenteils eingegeben wird, die Steuerung das mit dem zweiten Schnittstellenteil verbundene drahtlose Dimmschnittstellenmodul als ein Bluetooth-Dimmschnittstellenmodul erkennt, wobei, wenn der Spannungspegel in einem dritten Bereich über den Anschlussstift des zweiten Schnittstellenteils eingegeben wird, die Steuerung das mit dem zweiten Schnittstellenteil verbundene drahtlose Dimmschnittstellenmodul als ein ZigBee-Dimmschnittstellenmodul erkennt, wobei, wenn der Spannungspegel in einem vierten Bereich über den Anschlussstift des zweiten Schnittstellenteils eingegeben wird, die Steuerung das mit dem zweiten Schnittstellenteil verbundene drahtlose Dimmschnittstellenmodul als ein Z-Wave-Dimmschnittstellenmodul erkennt, wobei, wenn der Spannungspegel über den Anschlussstift des zweiten Schnittstellenteils eingegeben wird, die Steuerung das mit dem zweiten Schnittstellenteil verbundene drahtlose Dimmschnittstellenmodul als ein WiFi-Dimmschnittstellenmodul erkennt.

9. Lichtansteuerungsverfahren einer Lichtansteuerungsvorrichtung, umfassend:
Einstecken eines Dimmschnittstellenmoduls (211, 212) in mindestens einen einer Vielzahl von Schnittstellenteilen (300, 400);
Empfangen (S110) von Modulerkennungsinformationen von dem eingesteckten Dimmschnittstellenmodul;
Bestimmen (S120) einer Art von eingestecktem Dimmschnittstellenmodul unter Verwendung der empfangenen Modulerkennungsinformationen;
Einstellen (S130) eines Dimmmodus basierend auf der Art des bestimmten Dimmschnittstellenmoduls;
Empfangen eines Steuerbefehls von dem eingesteckten Dimmschnittstellenmodul; und
Ausgeben eines Lichtdimmsignals gemäß dem empfangenen Steuerbefehl basierend auf dem eingestellten Dimmmodus, wobei das Empfangen der Modulerkennungsinformationen umfasst:
Empfangen von Modulerkennungsinformationen, die von einem verdrahteten Dimmschnittstellenmodul (211) über einen beliebigen Anschlussstift (P2) einer Vielzahl von Anschlussstiften übertragen werden, die einen ersten Schnittstellenteil (300) der Vielzahl von Schnittstellenteilen bilden, und
Empfangen von Modulerkennungsinformationen, die von einem drahtlosen Dimmschnittstellenmodul (212) durch einen beliebigen Anschlussstift (P9) einer Vielzahl von Anschlussstiften übertragen werden, die einen zweiten Schnittstellenteil (400) der Vielzahl von Schnittstellenteilen bilden.

10. Lichtansteuerungsverfahren einer Lichtansteuerungsvorrichtung nach Anspruch 9, wobei das Einstecken das Einstecken eines verdrahteten Dimmschnittstellenmoduls von einem von 0-10V, einer digital adressierbaren Beleuchtungsschnittstelle (DALI) und einer Ferngeräteverwaltung (RDM) in einen ersten Schnittstellenteil enthält, wobei die empfangene Modulerkennungsinformationen ein Spannungspegel sind, wobei das Bestimmen enthält:
wenn der Spannungspegel in einem ersten Bereich über den Anschlussstift des ersten Schnittstellenteils eingegeben wird, Erkennen, dass kein Modul mit dem ersten Schnittstellenteil verbunden ist; wenn der Spannungspegel in einem zweiten Bereich über den Anschlussstift des ersten Schnittstellenteils eingegeben wird, Erkennen des mit dem ersten Schnittstellenteil verbundenen verdrahteten Dimmschnittstellenmoduls als ein 0-10V-Dimmschnittstellenmodul; wenn der Spannungspegel in einem dritten Bereich über den Anschlussstift des ersten Schnittstellenteils eingegeben wird, Erkennen des mit dem ersten Schnittstellenteil verbundenen verdrahteten Dimmschnittstellenmoduls als DALI-Dimmschnittstellenmodul; wenn der Spannungspegel in einem vierten Bereich über den Anschlussstift des ersten Schnittstellenteils eingegeben wird, Erkennen des mit dem ersten Schnittstellenteil verbundenen verdrahteten Dimmschnittstellenmoduls als ein DMX RDM-Dimmschnittstellenmodul.

11. Lichtansteuerungsverfahren einer Lichtansteuerungsvorrichtung nach Anspruch 10, wobei das Einstecken das Einstecken eines drahtlosen Dimmschnittstellenmoduls von einem von ZigBee, Bluetooth, Z-Wave und WiFi in einen zweiten Schnittstellenteil enthält, wobei die empfangenen Modulerkennungsinformationen ein Spannungspegel sind, wobei das Bestimmen enthält:
wenn der Spannungspegel in dem ersten Bereich über den Anschlussstift des zweiten Schnittstellenteils eingegeben wird, Erkennen, dass kein Modul mit dem zweiten Schnittstellenteil verbunden ist; wenn der Spannungspegel in dem zweiten Bereich über den Anschlussstift des zweiten Schnittstellenteils eingegeben wird, Erkennen des mit dem zweiten Schnittstellenteil verbundenen drahtlosen Dimmschnittstellenmoduls als ein Bluetooth-Dimmschnittstellenmodul; wenn der Spannungspegel in dem dritten Bereich über den Anschlussstift des zweiten Schnittstellenteils eingegeben wird, Erkennen des mit dem zweiten Schnittstellenteil verbundenen drahtlosen Dimmschnittstellenmoduls als ein ZigBee-Dimmschnittstellenmodul; wenn ein Spannungspegel in dem vierten Bereich über den Anschlussstift des zweiten Schnittstellenteils eingegeben wird, Erkennen des mit dem zweiten Schnittstellenteil verbundenen drahtlosen Dimmschnittstellenmoduls als ein Z-Wave-Dimmschnittstellenmodul; wenn ein Spannungspegel in dem fünften Bereich über den Anschlussstift des zweiten Schnittstellenteils eingegeben wird, Erkennen des mit dem zweiten Schnittstellenteil verbundenen drahtlosen Dimmschnittstellenmoduls als ein WiFi-Dimmschnittstellenmodul.

12. Lichtansteuerungsverfahren einer Lichtansteuerungsvorrichtung nach Anspruch 10, ferner umfassend das Zuführen einer Ansteuerungsleistung einer bestimmten Größe zu der Beleuchtung (220) basierend auf dem ausgegebenen Beleuchtungsdimmsignal.

13. Lichtansteuerungsverfahren einer Lichtansteuerungsvorrichtung nach Anspruch 10, ferner umfassend das Empfangen und Speichern eines Konfigurationswerts, der auf das Dimmen der Beleuchtung (220) angewendet werden soll, die von einer extern versorgten Stromquelle angesteuert wird, wobei der Konfigurationswert mindestens eines von einem maximalen Stromwert der Beleuchtung (220), Informationen zum zeitlichen Verlauf der Kompensation der Beleuchtungsverschlechterungszeit, einem minimalen Stromwert des Dimmens auf 0-10 V, Informationen zum zeitlichen Verlauf für das Dimmen der Beleuchtung gemäß Zeit und Informationen für die Beleuchtungsbetriebszeit enthält.

14. Lichtansteuerungsverfahren einer Lichtansteuerungsvorrichtung nach Anspruch 10, ferner umfassend das Durchführen einer Modusumschaltung innerhalb mindestens zweier Dimmmodi eines zeitlichen Verlaufsmodus, eines 0-10V-Modus, eines DALI-Modus, eines RDM-Modus, eines ZigBee-Modus, eines Bluetooth-Modus, eines Z-Wave-Modus und eines WiFi-Modus.

15. Lichtansteuerungsverfahren einer Lichtansteuerungsvorrichtung nach Anspruch 14, wobei das Durchführen der Modusumschaltung enthält: Einstellen eines anfänglichen Dimmmodus basierend darauf, dass das Dimmschnittstellenmodul mit dem ersten und dem zweiten Schnittstellenteil gekoppelt ist, Umschalten in einen anderen Dimmmodus, um dem Dimmschnittstellenmodul zu entsprechen, das den Steuerbefehl bereitstellt, wenn ein Steuerbefehl empfangen wird, und Umschalten des Dimmmodus in den anfänglichen Dimmmodus, wenn ein Rückkehrbefehl in den anfänglichen Dimmmodus von dem spezifischen Dimmschnittstellenmodul eingegeben wird.

## Revendications

1. Dispositif de commande d'éclairage (210) comprenant :
un boîtier (210A) et une unité de commande disposée à l'intérieur du boîtier et conçue pour émettre un signal de gradation d'éclairage, le dispositif de commande d'éclairage étant **caractérisé en ce que** l'unité de commande comprend des première et seconde parties d'interface (211, 212) auxquelles sont couplés de manière amovible, respectivement, un premier et un second modules d'interface de gradation (300, 400), et un contrôleur (215), conçu pour déterminer un type de module d'interface de gradation lorsque lesdits premier et second modules d'interface de gradation sont couplés à au moins une partie d'interface respective des première et seconde parties d'interface, conçu pour définir un mode de gradation en fonction du type de module d'interface de gradation déterminé, conçu pour recevoir une commande de contrôle desdits premier et second modules d'interface de gradation couplés à ladite au moins une partie d'interface respective, et conçu pour émettre le signal de gradation d'éclairage en fonction de la commande de contrôle reçue sur la base du mode de gradation défini,
dans lequel chacune des première et seconde parties de l'interface comprend :
une broche (P2, P9) configurée pour recevoir des informations de reconnaissance de module provenant desdits modules d'interface de gradation couplés aux première et seconde parties d'interface, et dans lequel le contrôleur est configuré pour déterminer le type de modules d'interface de gradation connectés aux première et seconde parties d'interface en utilisant les informations de reconnaissance de module.

2. Dispositif de commande d'éclairage selon la revendication 1, dans lequel la première partie d'interface i (211) est couplée à un module d'interface de gradation câblé (300) de l'une quelconque de 0-10V, à une interface d'éclairage numérique adressable (DALI) et à une gestion de dispositif à distance (RDM), et dans lequel la seconde partie entrelacée (212) est couplée à un module d'interface de gradation sans fil (400) de l'un quelconque de ZigBee, Bluetooth, Z-wave et WiFi.

3. Dispositif de commande d'éclairage selon la revendication 2, dans lequel la broche (P2) de la première partie d'interface est configurée pour recevoir les informations de reconnaissance de module provenant du module d'interface de gradation câblé couplé à la première partie d'interface I, dans lequel les informations de reconnaissance de module reçues sont un niveau de tension, et dans lequel le contrôleur est configuré pour déterminer le type de module d'interface de gradation câblé connecté à la première partie d'interface i en fonction du niveau de tension.

4. Dispositif de commande d'éclairage selon la revendication 3, dans lequel la broche (P9) de la seconde partie d'interface est configurée pour recevoir les informations de reconnaissance de module provenant du module d'interface de gradation sans fil couplé à la seconde partie d'interface, dans lequel les informations de reconnaissance de module reçues sont un niveau de tension, et dans lequel le contrôleur est configuré pour déterminer le type de module d'interface de gradation sans fil connecté à la seconde partie d'interface en fonction du niveau de tension.

5. Dispositif de commande d'éclairage selon la revendication 1, dans lequel l'unité de commande comprend en outre une partie de configuration (214) commandée par une source d'énergie fournie de l'extérieur pour recevoir et stocker une valeur de configuration à appliquer à la gradation de l'éclairage (220), et la valeur de configuration comprend au moins l'une d'une valeur de courant maximum de l'éclairage (220), d'informations de programme de compensation du temps de dégradation de l'éclairage, d'une valeur de courant minimale de gradation 0-10 V, d'informations de programme de gradation de l'éclairage en fonction du temps, et d'informations de temps de fonctionnement de l'éclairage.

6. Dispositif de commande d'éclairage selon la revendication 2, dans lequel le contrôleur est conçu pour définir un mode de gradation initial basé sur le module d'interface de gradation couplé aux première et seconde parties d'interface, et pour passer à un mode de gradation différent parmi une pluralité de modes de gradation, y compris le mode de gradation initial défini, et lorsqu'une commande de retour au mode de gradation initial est entrée à partir du module d'interface de gradation sans fil, le contrôleur commute le mode de gradation sur le mode de gradation initial, et le mode de gradation comprend un mode de programmation, un mode 0-10V, un mode DALI, un mode RDM, un mode Zigbee, un mode Bluetooth, un mode Z-wave et un mode WiFi.

7. Dispositif de commande d'éclairage selon la revendication 3, dans lequel, lorsque le niveau de tension dans une première plage est entré par la broche (P2) de la première partie d'interface, le contrôleur reconnaît qu'aucun module n'est connecté à la première partie d'interface,
dans lequel, lorsque le niveau de tension dans une deuxième plage est entré par la broche de la première partie d'interface, le contrôleur reconnaît le module d'interface de gradation câblé connecté à la première partie d'interface comme un module d'interface de gradation 0-10V, dans lequel, lorsque le niveau de tension dans une troisième plage est entré par la broche de la première partie d'interface, le contrôleur reconnaît le module d'interface de gradation câblé connecté à la première partie d'interface comme un module d'interface de gradation DALI,
dans lequel, lorsque le niveau de tension dans une quatrième plage est entré par la broche de la première partie d'interface, le contrôleur reconnaît le module d'interface de gradation câblé connecté à la première partie de l'interface comme un module d'interface de gradation DMX RDM.

8. Dispositif de commande d'éclairage selon la revendication 4, dans lequel, lorsque le niveau de tension dans une première plage est entré par la broche (P9) de la seconde partie d'interface, le contrôleur reconnaît qu'aucun module n'est connecté à la seconde partie d'interface,
dans lequel, lorsque le niveau de tension dans une deuxième plage est entré par la broche de la seconde partie d'interface, le contrôleur reconnaît le module d'interface de gradation sans fil connecté à la seconde partie d'interface comme un module d'interface de gradation Bluetooth, dans lequel, lorsque le niveau de tension dans une troisième plage est entré par la broche de la seconde partie d'interface, le contrôleur reconnaît le module d'interface de gradation sans fil connecté à la seconde partie d'interface comme un module d'interface de gradation ZigBee,
dans lequel, lorsque le niveau de tension dans une quatrième plage est entré par la broche de la seconde partie d'interface, le contrôleur reconnaît le module d'interface de gradation sans fil connecté à la seconde partie de l'interface comme un module d'interface de gradation Z-Wave,
dans lequel, lorsque le niveau de tension dans une cinquième plage est entré par la broche de la seconde partie d'interface, le contrôleur reconnaît le module d'interface de gradation sans fil connecté à la seconde partie de l'interface comme un module d'interface de gradation WiFi.

9. Procédé de commande d'éclairage d'un dispositif de commande d'éclairage comprenant :
l'insertion d'un module d'interface de gradation (211, 212) dans au moins une d'une pluralité de parties d'interface (300, 400) ; la réception (S110) d'informations de reconnaissance de module provenant du module d'interface de gradation inséré ; la détermination (S120) d'un type de module d'interface de gradation inséré en utilisant les informations de reconnaissance de module reçues ;
la définition (S130) d'un mode de gradation basé sur le type de module d'interface de gradation déterminé ;
la réception d'une commande de contrôle du module d'interface de gradation inséré ; et l'émission d'un signal de gradation d'éclairage selon la commande de contrôle reçue, en fonction du mode de gradation défini,
dans lequel la réception des informations de reconnaissance de module comprend : la réception d'informations de reconnaissance de module transmises à partir d'un module d'interface de gradation câblé (211) par l'intermédiaire d'une broche quelconque (P2) d'une pluralité de broches constituant une première partie d'interface (300) de la pluralité de parties d'interface, et la réception d'informations de reconnaissance de module transmises à partir d'un module d'interface de gradation sans fil (212) par l'intermédiaire d'une broche quelconque (P9) d'une pluralité de broches constituant une seconde partie d'interface (400) de la pluralité de parties d'interface.

10. Procédé de commande d'éclairage d'un dispositif de commande d'éclairage selon la revendication 9, dans lequel l'insertion comprend l'insertion d'un module d'interface de gradation câblé de l'une quelconque de 0-10V, d'une interface d'éclairage numérique adressable (DALI) et d'une gestion de dispositif à distance (RDM) dans une première partie d'interface, dans laquelle l'information de reconnaissance de module reçue est un niveau de tension,
dans lequel la détermination comprend :
lorsque le niveau de tension dans une première plage est entré par la broche de la première partie d'interface, la reconnaissance qu'aucun module n'est connecté à la première partie d'interface, lorsque le niveau de tension dans une deuxième plage est entré par la broche de la première partie d'interface, la reconnaissance du module d'interface de gradation câblé connecté à la première partie d'interface comme un module d'interface de gradation 0-10V, lorsque le niveau de tension dans une troisième plage est entré par la broche de la première partie d'interface, la reconnaissance du module d'interface de gradation câblé connecté à la première partie d'interface comme un module d'interface de gradation DALI.
lorsque le niveau de tension dans une quatrième plage est entré par la broche de la première partie de l'interface, la reconnaissance du module d'interface de gradation câblé connecté à la première partie de l'interface comme un module d'interface de gradation DMX RDM.

11. Procédé de commande d'éclairage d'un dispositif de commande d'éclairage selon la revendication 10, dans lequel l'insertion comprend l'insertion d'un module d'interface de gradation sans fil, l'un quelconque de Zigbee, Bluetooth, Z-wave et WiFi, dans une seconde partie d'interface, dans lequel les informations de reconnaissance de module reçues sont un niveau de tension, dans lequel la détermination comprend :
lorsque le niveau de tension dans la première plage est entré par la broche de la seconde partie de l'interface, la reconnaissance qu'aucun module n'est connecté à la seconde partie d'interface,
lorsque le niveau de tension dans la deuxième plage est entré par la broche de la seconde partie d'interface, la reconnaissance du module d'interface de gradation sans fil connecté à la seconde partie d'interface comme un module d'interface de gradation Bluetooth,
lorsque le niveau de tension dans la troisième plage est entré par la broche de la seconde partie d'interface, la reconnaissance du module d'interface de gradation sans fil connecté à la seconde partie d'interface comme un module d'interface de gradation Zig Bee,
lorsque le niveau de tension dans la quatrième plage est entré par la broche de la seconde partie d'interface, la reconnaissance du module d'interface de gradation sans fil connecté à la seconde partie d'interface comme un module d'interface de gradation Z-Wave,
lorsque le niveau de tension dans une cinquième plage est entré par la broche de la seconde partie d'interface, la reconnaissance du module d'interface de gradation sans fil connecté à la seconde partie d'interface comme un module d'interface de gradation WiFi.

12. Procédé de commande d'éclairage d'un dispositif de commande d'éclairage selon la revendication 10, comprenant en outre la fourniture d'une puissance de commande d'une grandeur spécifique à l'éclairage (220) basée sur le signal de gradation de l'éclairage de sortie.

13. Procédé de commande d'éclairage d'un dispositif de commande d'éclairage selon la revendication 10, comprenant en outre la réception et le stockage d'une valeur de configuration à appliquer à la gradation de l'éclairage (220) commandé par une source d'énergie fournie de l'extérieur,
dans lequel la valeur de configuration comprend au moins une d'une valeur de courant maximale de l'éclairage (220), une des informations de programme de compensation du temps de dégradation de l'éclairage, d'une valeur de courant minimale de 0-10 V de gradation, des informations de programme de gradation de l'éclairage en fonction du temps et des informations du temps de fonctionnement de l'éclairage.

14. Procédé de commande d'éclairage d'un dispositif de commande d'éclairage selon la revendication 10, comprenant en outre la réalisation d'une commutation de mode dans au moins deux modes de gradation d'un mode de programmation, un mode 0-10V, un mode DALI, un mode RDM, un mode Zigbee, un mode Bluetooth, un mode Z-wave et un mode WiFi.

15. Procédé de commande d'éclairage d'un dispositif de commande d'éclairage selon la revendication 14, dans lequel la réalisation de la commutation de mode comprend la définition d'un mode de gradation initial basé sur le module d'interface de gradation couplé aux première et seconde parties d'interface, la commutation à un mode de gradation différent de manière à correspondre au module d'interface de gradation fournissant la commande de contrôle lorsqu'une commande de contrôle est reçue, et la commutation du mode de gradation au mode de gradation initial lorsqu'une commande de retour au mode de gradation initial est entrée à partir du module d'interface de gradation spécifique.
